# EUROPEAN PATENT APPLICATION

(11) **EP 3 756 884 A1**
(43) Date of publication of application: **30.12.2020**
(21) Application number: 19756942.9
(22) Date of filing: 20.02.2019
(51) Int. Cl.: B32B 27/18, C08K 3/22, C08L 101/00, C09K 21/02, H01M 2/02, H01M 10/613, H01M 10/623, H01M 10/659

(54) **FIREPROOF LAMINATE AND BATTERY**

(30) Priority: 20.02.2018 JP 2018028045; 23.02.2018 JP 2018031131; 07.09.2018 JP 2018167983; 07.09.2018 JP 2018167994; 05.11.2018 JP 2018208305
(71) Applicant: SEKISUI CHEMICAL CO., LTD., Osaka-shi Osaka 530-8565 (JP)
(72) Inventor: OOTSUKI, Kenichi, Hasuda-shi, Saitama 349-0198 (JP); DOHI, Akihito, Hasuda-shi, Saitama 349-0198 (JP); SHIMAMOTO, Michio, Hasuda-shi, Saitama 349-0198 (JP)
(74) Representative: Ter Meer Steinmeister & Partner
(86) International application number: PCT/JP2019/006366
(87) International publication number: WO 2019/163839

(57) **Abstract**

Fire-resistant laminate 20 comprises base material 21 and fire-resistant resin layer 22 disposed on at least one side of the base material 21. The fire-resistant resin layer 22 formed of a fire-resistant resin composition, the composition comprising a resin and at least one fire-resistant additive selected from the group consisting of an endothermic agent, a flame retardant, and a thermally expandable layered inorganic matter, and the softening point or melting point of the base material 21 being 300°C or higher.

## Description

### Technical Field

The present invention relates to a fire-resistant laminate and a battery comprising the fire-resistant laminate.

### Background Art

Various batteries typified by lithium batteries may have defects such as ignition or smoking due to the thermal runaway of the batteries caused by internal short-circuit, etc. In order to minimize damages ascribable to such defects, studies have been made on methods for preventing the heat of a battery having an abnormally high temperature from being transferred to its neighboring batteries and housings containing the batteries. Examples of such methods include methods using a protective material such as a fire-resistant material or a heat insulating layer in the neighborhood of a battery cell.

For example, PTL1 discloses a battery cell with its outside at least partially covered with a fire-resistant coating, and discloses that: the fire-resistant coating is an ablative coating, an expandable coating or an endothermic coating; and a polyurethane coating may be used.

### Citation List

### Patent Literature

PTL1: JP 2013-528911 A

In recent years, batteries or the like of mobile phones have been desired to have high fire resistance and fire-extinguishing performance, because these batteries, etc. have high battery capacity and easily ignite due to rapid temperature elevation. However, the fire-resistant coating of PTL1 cannot retain its shape when ignition occurs, and thus cannot exert sufficient fire resistance and fire-extinguishing performance.

Batteries of electronic equipment such as mobile phones may ignite by thermal runaway. Upon thermal runaway of a battery, the battery is largely swollen due to a gas or a vaporized electrolyte solution resulting from the decomposition of an active material of an electrode material. Then, fire spouts with very strong force and causes heavy damage. Thus, there is a demand for a covering material that is disposed on the outer perimeter of a battery, reduces the force of fire by efficiently dispersing the force of fire spouting out of the thermally runaway battery, and has high fire-extinguishing performance and fire resistance. However, the fire-resistant coating of PTL1 cannot retain its shape when ignition occurs, and thus cannot exert sufficient fire resistance and fire-extinguishing performance.

Accordingly, an object of the present invention is to provide a fire-resistant laminate having high fire resistance and fire-extinguishing performance against ignition associated with, for example, the temperature elevation of a battery, and a battery comprising the fire-resistant laminate.

Another object of the present invention is to provide a fire-resistant laminate that reduces the force of fire by efficiently dispersing fire spouting out of a battery against ignition ascribable to thermal runaway associated with, for example, the temperature elevation of the battery, and has high fire-extinguishing performance and fire resistance, and a battery comprising the fire-resistant laminate.

### Solution to Problem

The present inventors have conducted diligent studies and consequently completed the first embodiment of the present invention given below by finding that a fire-resistant resin layer having a fire-resistant additive is disposed on a base material having a high softening point or melting point, whereby the base material effectively works as a support even after the occurrence of ignition so that the fire-resistant additive is secured on site and can thereby exert high fire resistance and fire-extinguishing performance.

Specifically, the first embodiment of the present invention is summarized as the following [1] to [18].
[1] A fire-resistant laminate comprising a base material and a fire-resistant resin layer disposed on at least one side of the base material,
   the fire-resistant resin layer formed of a fire-resistant resin composition, the composition comprising a resin and at least one fire-resistant additive selected from the group consisting of an endothermic agent, a flame retardant, and a thermally expandable layered inorganic matter, and
   a softening point or a melting point of the base material being 300°C or higher.
[2] The fire-resistant laminate according to [1], wherein the base material has one or two or more holes, and an aperture ratio of the base material is 5 to 60%.
[3] The fire-resistant laminate according to [1] or [2], wherein a tensile strength at 200°C of the base material is 3 GPa or more.
[4] The fire-resistant laminate according to any one of [1] to [3], wherein the base material is a metal base material.
[5] The fire-resistant laminate according to any one of [1] to [4], wherein the endothermic agent has a thermal decomposition onset temperature of 800°C or lower and an amount of heat absorbed of 300 J/g or larger.
[6] The fire-resistant laminate according to any one of [1] to [5], wherein the endothermic agent has a thermal decomposition onset temperature of 500°C or lower and an amount of heat absorbed of 500 J/g or larger.
[7] The fire-resistant laminate according to any one of [1] to [6], wherein the endothermic agent is a hydrated metal compound.
[8] The fire-resistant laminate according to any one of [1] to [7], wherein the endothermic agent is at least one selected from the group consisting of aluminum hydroxide, magnesium hydroxide, calcium sulfate dihydrate, and magnesium sulfate heptahydrate.
[9] The fire-resistant laminate according to any one of [1] to [8], wherein the thermally expandable layered inorganic matter is thermally expandable graphite.
[10] The fire-resistant laminate according to any one of [1] to [9], wherein the flame retardant is a phosphorus atom-containing compound.
[11] The fire-resistant laminate according to any one of [1] to [10], wherein a content of the fire-resistant additive is 50 to 2500 parts by mass per 100 parts by mass of the resin.
[12] The fire-resistant laminate according to any one of [1] to [11], wherein the resin is a thermoplastic resin.
[13] The fire-resistant laminate according to any one of [1] to [12], wherein a thickness of the fire-resistant resin layer is 2 to 5000 µm.
[14] The fire-resistant laminate according to any one of [1] to [13], wherein a thickness ratio of the fire-resistant resin layer to the base material is 2/8 to 9/1.
[15] The fire-resistant laminate according to any one of [1] to [14] for use in a battery.
[16] A battery comprising a fire-resistant laminate according to any one of [1] to [15] and a battery cell, wherein the fire-resistant laminate is disposed on the surface of the battery cell.
[17] The battery according to [16], wherein the fire-resistant laminate is disposed on the surface of the battery cell such that the fire-resistant resin layer and the base material are arranged in the presented order from the battery cell side.
[18] The battery according to [16] or [17], wherein the battery cell is covered with the fire-resistant laminate, and a coverage of the battery cell with the base material is 40 to 95%.
   The present inventors have conducted diligent studies and consequently found that a fire-resistant resin layer is disposed on a base material having an aperture ratio in a specific range, whereby fire spouting out of a battery can be efficiently dispersed, and furthermore, the base material effectively works as a support so that a fire-resistant additive secured on site can exert high fire resistance and fire-extinguishing performance. The present inventors have also found that similar effects are exerted by setting the coverage of a battery cell with the base material laminated with the fire-resistant resin layer to a specific range. On the basis of these findings, the second embodiment of the present invention given below has been completed.
   Specifically, the second embodiment of the present invention provides the following [19] to [35].
[19] A fire-resistant laminate comprising a base material and a fire-resistant resin layer disposed on at least one side of the base material,
   the fire-resistant resin layer formed of a fire-resistant resin composition, the composition comprising a resin and at least one fire-resistant additive selected from the group consisting of an endothermic agent, a flame retardant, and a thermally expandable layered inorganic matter,
   the base material having one or two or more holes, and an aperture ratio of the base material being 5 to 60%.
[20] The fire-resistant laminate according to [19], wherein a tensile strength at 200°C of the base material is 3 GPa or more.
[21] The fire-resistant laminate according to [19] or [20], wherein the base material is a metal base material.
[22] The fire-resistant laminate according to any one of [19] to [21], wherein the endothermic agent has a thermal decomposition onset temperature of 800°C or lower and an amount of heat absorbed of 300 J/g or larger.
[23] The fire-resistant laminate according to any one of [19] to [22], wherein the endothermic agent has a thermal decomposition onset temperature of 500°C or lower and an amount of heat absorbed of 500 J/g or larger.
[24] The fire-resistant laminate according to any one of [19] to [23], wherein the endothermic agent is a hydrated metal compound.
[25] The fire-resistant laminate according to any one of [19] to [24], wherein the endothermic agent is at least one selected from the group consisting of aluminum hydroxide, magnesium hydroxide, calcium sulfate dihydrate, and magnesium sulfate heptahydrate.
[26] The fire-resistant laminate according to any one of [19] to [25], wherein the thermally expandable layered inorganic matter is thermally expandable graphite.
[27] The fire-resistant laminate according to any one of [19] to [26], wherein the flame retardant is a phosphorus atom-containing compound.
[28] The fire-resistant laminate according to any one of [19] to [27], wherein a content of the fire-resistant additive is 50 to 2500 parts by mass per 100 parts by mass of the resin.
[29] The fire-resistant laminate according to any one of [19] to [28], wherein the resin is a thermoplastic resin.
[30] The fire-resistant laminate according to any one of [19] to [29], wherein a thickness of the fire-resistant resin layer is 2 to 5000 µm.
[31] The fire-resistant laminate according to any one of [19] to [30], wherein a thickness ratio of the fire-resistant resin layer to the base material is 2/8 to 9/1.
[32] The fire-resistant laminate according to any one of [19] to [31] for use in a battery.
[33] A battery comprising a fire-resistant laminate according to any one of [19] to [32] and a battery cell, wherein the fire-resistant laminate is disposed on the surface of the battery cell.
[34] The battery according to [33], wherein the fire-resistant laminate is disposed on the surface of the battery cell such that the fire-resistant resin layer and the base material are arranged in the presented order from the battery cell side.
[35] A battery comprising a fire-resistant laminate and a battery cell, the battery cell being covered with the fire-resistant laminate, the fire-resistant laminate comprising a base material and a fire-resistant resin layer disposed on at least one side of the base material, the fire-resistant resin layer formed of a fire-resistant resin composition, the composition comprising a resin and at least one fire-resistant additive selected from the group consisting of an endothermic agent, a flame retardant, and a thermally expandable layered inorganic matter, and a coverage of the battery cell with the base material being 40 to 95%.
   Further, the present invention also provides the following [36] to [46].
[36] A fire-resistant resin composition containing a flame retardant (A) having a liquefaction onset temperature of 50 to 700°C, and a resin.
[37] The fire-resistant resin composition according to [36], wherein the flame retardant (A) is one or more selected from the group consisting of red phosphorus, triphenyl phosphate, ammonium polyphosphate, and zinc borate.
[38] The fire-resistant resin composition according to [36] or [37], wherein an average particle size of the flame retardant (A) is 1 to 60 µm.
[39] The fire-resistant resin composition according to any one of [36] to [38], wherein the resin is a thermoplastic resin.
[40] The fire-resistant resin composition according to any one of [36] to [39], wherein a melt flow rate of the resin is 1.0 g/10 min or more.
[41] The fire-resistant resin composition according to any one of [36] to [40], wherein a content of the flame retardant (A) per 100 parts by mass of the resin is 15 to 2500 parts by mass.
[42] The fire-resistant resin composition according to any one of [36] to [41] for use in a battery.
[43] A fire-resistant sheet comprising a fire-resistant resin composition according to any one of [36] to [42].
[44] The fire-resistant sheet according to [43], wherein a thickness is 5 to 10000 µm.
[45] A battery comprising a fire-resistant sheet according to [43] or [44] and a battery cell, the fire-resistant sheet being attached to the surface of the battery cell.
[46] The battery according to [45], wherein the battery cell comprises a safety valve, and the safety valve is covered with the fire-resistant sheet.

### Advantageous Effects of Invention

The first embodiment of the present invention can provide a fire-resistant laminate that has high fire resistance and can exert high fire-extinguishing performance when ignition occurs, and a battery comprising the fire-resistant laminate.

The second embodiment of the present invention can provide a fire-resistant laminate that reduces the force of fire by efficiently dispersing fire spouting out of a battery, and can exert high fire-extinguishing performance and fire resistance, and a battery comprising the fire-resistant laminate and having the characteristics described above.

### Brief Description of Drawings

[Fig. 1] Fig. 1 is a schematic cross-sectional view showing one embodiment of a fire-resistant laminate.
[Fig. 2] Fig. 2 is a schematic cross-sectional view showing another embodiment of the fire-resistant laminate.
[Fig. 3] Fig 3 is a diagrammatic top view showing one embodiment of a hole disposed in a base material.
[Fig. 4] Fig. 4 is a schematic cross-sectional view showing one embodiment of a hole disposed in a base material, and a fire-resistant resin layer.
[Fig. 5] Fig. 5 is a diagrammatic cross-sectional view showing one embodiment of a battery having a square battery cell.
[Fig. 6] Fig. 6 is a diagrammatic cross-sectional view showing another embodiment of the battery having a square battery cell.
[Fig. 7] Fig. 7 is a diagrammatic cross-sectional view showing one embodiment of a battery having a laminated battery cell.
[Fig. 8] Fig. 8 is a diagrammatic cross-sectional view showing one embodiment of a battery having a cylindrical battery cell.
[Fig. 9] Fig. 9 is a diagrammatic cross-sectional view showing one embodiment of a battery provided with two battery cells.
[Fig. 10] Fig. 10 is a diagrammatic perspective view showing one embodiment of the battery having a square battery cell.

### Description of Embodiments

Hereinafter, the present invention will be described in detail with reference to embodiments.

### [Fire-resistant laminate]

The fire-resistant laminate of the present invention comprises a base material and a fire-resistant resin layer disposed on at least one side of the base material. The fire-resistant resin layer formed of a fire-resistant resin composition, the composition comprising a resin and a predetermined fire-resistant additive.

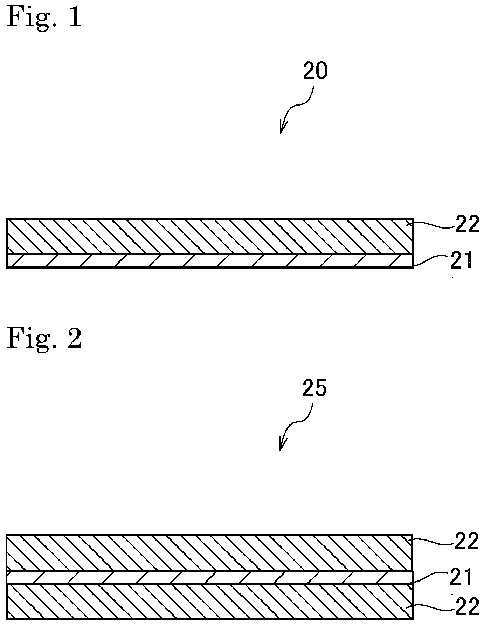

In the present invention, the fire-resistant laminate may be fire-resistant laminate 20 comprising base material 21 and fire-resistant resin layer 22 disposed on one side of the base material 21 as shown in Fig. 1, or may be fire-resistant laminate 25 comprising base material 21 and fire-resistant resin layers 22, 22 disposed on both sides of the base material 21 as shown in Fig. 2. Among them, the fire-resistant laminate 20 with the fire-resistant resin layer 22 provided on one side of the base material 21 as shown in Fig. 1 is preferred.

The fire-resistant resin layer 22 may be laminated directly with the base material 21, or may be laminated with the base material 21 via a primer layer, an adhesive layer, or the like formed on the surface of the base material 21 without inhibiting the advantageous effects of the present invention, and is preferably laminated directly therewith.

### (First embodiment)

In the first embodiment of the present invention, the softening point or melting point of the base material is 300°C or higher.

In the present invention, the fire-resistant resin layer has a predetermined fire-resistant additive and can thereby exhibit given fire resistance and fire-extinguishing performance. In the first embodiment, the base material has a high softening point or a high melting point and therefore effectively functions as a support even when ignition occurs so that the fire-resistant additive can be secured at a predetermined location. Therefore, fire resistance and fire-extinguishing performance are improved.

Hereinafter, each member constituting the fire-resistant laminate will be described in detail.

### [Fire-resistant resin layer]

In the present invention, the fire-resistant resin layer comprises a resin and a fire-resistant additive. The fire-resistant additive for use in the fire-resistant resin layer is at least one selected from the group consisting of an endothermic agent, a flame retardant, and a thermally expandable layered inorganic matter. The fire-resistant resin layer containing the fire-resistant additive has fire resistance and has fire-extinguishing performance which controls fire when ignition occurs.

### (Resin)

Examples of the resin for use in the fire-resistant resin layer include thermoplastic resins, thermosetting resins, and elastomer resins.

Examples of the thermoplastic resin include: polyolefin resins such as polypropylene resin, polyethylene resin, poly(1-)butene resin, and polypentene resin; polyester resins such as polyethylene terephthalate; and synthetic resins such as polystyrene resin, acrylonitrile-butadiene-styrene (ABS) resin, polyvinyl acetal resin, ethylene-vinyl acetate copolymer (EVA) resin, polyvinyl alcohol resin, polycarbonate resin, polyphenylene ether resin, acrylic resin, polyamide resin, polyvinyl chloride resin (PVC), novolac resin, polyurethane resin, and polyisobutylene.

Examples of the thermosetting resin include synthetic resins such as epoxy resin, urethane resin, phenol resin, urea resin, melamine resin, unsaturated polyester resin, and polyimide.

Examples of the elastomer resin include acrylonitrile-butadiene rubber, ethylene-propylene-diene rubber (EPDM), ethylene-propylene rubber, natural rubber, polybutadiene rubber, polyisoprene rubber, styrene-butadiene block copolymers, hydrogenated styrene-butadiene block copolymers, hydrogenated styrene-butadiene-styrene block copolymers, hydrogenated styrene-isoprene block copolymers, and hydrogenated styrene-isoprene-styrene block copolymers.

In the first embodiment of the present invention, one of these resins may be used alone, or two or more thereof may be used as a mixture.

The resin contained in the fire-resistant resin layer is preferably a thermoplastic resin among those described above. When the thermoplastic resin is used in the fire-resistant resin layer, the fire-resistant resin layer can be easily formed on the base material by extrusion forming or coating with slurry or the like as mentioned later.

The thermoplastic resin is preferably polyvinyl chloride resin from the viewpoint of fire resistance, and is preferably polyvinyl acetal resin, ethylene-vinyl acetate copolymer resin, acrylic resin, polyvinyl alcohol resin, or the like from the viewpoint of adhesiveness to the base material, the formability of the fire-resistant resin layer, the dispersing ability of the fire-resistant additive, etc. Among them, polyvinyl chloride resin, polyvinyl acetal resin, or ethylene-vinyl acetate copolymer resin is more preferred, and polyvinyl acetal resin is particularly preferred.

### (Polyvinyl acetal resin)

The polyvinyl acetal resin is not particularly limited as long as the polyvinyl acetal resin is obtained by the acetalization of polyvinyl alcohol with aldehyde. Polyvinyl butyral resin is suitable.

The hydroxy group content of the polyvinyl acetal resin is preferably 20 to 40% by mol. When the hydroxy group content is 20% by mol or more, the fire-resistant resin layer has high polarity and easily has favorable adhesiveness to the base material. When the hydroxy group content is 40% by mol or less, the fire-resistant resin layer is prevented from being too hard. A higher hydroxy group content is more preferred from the viewpoint of higher adhesiveness to the base material. The hydroxy group content is more preferably 23% by mol or more, further preferably 26% by mol or more. Also, the hydroxy group content is more preferably 37% by mol or less, further preferably 33% by mol or less.

The degree of acetalization of the polyvinyl acetal resin is preferably 40 to 80% by mol. When the degree of acetalization falls within the range described above, the hydroxy group content described above falls within the desired range so that favorable adhesiveness to the base material is easily attained. The degree of acetalization is more preferably 55% by mol or more, further preferably 60% by mol or more, and is more preferably 75% by mol or less, further preferably 72% by mol or less.

The acetyl group content of the polyvinyl acetal resin is preferably 0.1 to 30% by mol. When the acetyl group content falls within this range, the fire-resistant resin layer is excellent in moisture resistance, is excellent in compatibility with a plasticizer, and exerts high flexibility for improved handleability. When the acetyl group content falls within this range, the hydroxy group content described above falls within the desired range so that favorable adhesiveness to the base material is easily attained. From these viewpoints, the acetyl group content is more preferably 0.2% by mol or more, further preferably 0.5% by mol or more, and is more preferably 15% by mol or less, further preferably 7% by mol or less.

The degree of acetalization, the hydroxy group content, and the acetyl group content can be measured and calculated by methods conforming to, for example, JIS K 6728 "Testing Methods for Polyvinyl Butyral".

The degree of polymerization of the polyvinyl acetal resin is preferably 300 to 4000. When the degree of polymerization falls within this range, the fire-resistant additive is properly dispersed in the fire-resistant resin layer. In addition, formability, etc. is also favorable. The degree of polymerization is more preferably 400 or more, further preferably 600 or more.

A lower degree of polymerization of the polyvinyl acetal resin decreases viscosity so that the fire-resistant additive is easily dispersed in the fire-resistant resin layer. From such a viewpoint, the degree of polymerization of the polyvinyl acetal resin is preferably 2000 or less, more preferably 1500 or less, further preferably 1000 or less.

The degree of polymerization of the polyvinyl acetal resin refers to a viscosity-average degree of polymerization measured on the basis of a method described in JIS K 6728.

The aldehyde is not particularly limited. In general, aldehyde having 1 to 10 carbon atoms is suitably used. Examples of the aldehyde having 1 to 10 carbon atoms include, but are not particularly limited to, n-butylaldehyde, isobutylaldehyde, n-valeraldehyde, 2-ethylbutylaldehyde, n-hexylaldehyde, n-octylaldehyde, n-nonylaldehyde, n-decylaldehyde, formaldehyde, acetaldehyde, and benzaldehyde. Among them, n-butylaldehyde, n-hexylaldehyde, or n-valeraldehyde is preferred, and n-butylaldehyde is more preferred. These aldehydes may each be used alone or may be used in combination of two or more thereof.

### (Polyvinyl chloride resin)

The polyvinyl chloride resin may be a vinyl chloride homopolymer or may be a vinyl chloride-based copolymer. The vinyl chloride-based copolymer is a copolymer of vinyl chloride and a monomer that is copolymerizable with vinyl chloride and has an unsaturated bond, and contains 50% by mass or more of a vinyl chloride-derived constituent unit.

Examples of the monomer that is copolymerizable with vinyl chloride and has an unsaturated bond include: vinyl esters such as vinyl acetate and vinyl propionate; acrylic acid; methacrylic acid; acrylic acid esters such as methyl acrylate and ethyl acrylate; methacrylic acid esters such as methyl methacrylate and ethyl methacrylate; olefins such as ethylene and propylene; aromatic vinyls such as acrylonitrile and styrene; and vinylidene chloride.

The polyvinyl chloride resin may be polychlorinated vinyl chloride resin obtained by chlorinating a vinyl chloride homopolymer, a vinyl chloride-based copolymer, or the like.

One of the polyvinyl chloride resins described above may be used alone, or two or more thereof may be used in combination.

### (Ethylene-vinyl acetate copolymer resin)

The ethylene-vinyl acetate copolymer resin may be non-cross-linked ethylene-vinyl acetate copolymer resin or may be high-temperature cross-linked ethylene-vinyl acetate copolymer resin. Alternatively, a modified ethylene-vinyl acetate resin such as an ethylene-vinyl acetate copolymer saponification product or an ethylene-vinyl acetate hydrolysate may be used as the ethylene-vinyl acetate copolymer resin.

The vinyl acetate content of the ethylene-vinyl acetate copolymer resin measured in conformity to JIS K 6730 "Testing Methods for Ethylene/Vinyl Acetate Resin" is preferably 10 to 50% by mass, more preferably 25 to 45% by mass. When the vinyl acetate content is equal to or more than the lower limit value, adhesiveness to the base material is high. When the vinyl acetate content is equal to or less than the upper limit value, the mechanical strength, such as rupture strength, of the fire-resistant resin layer is favorable.

The content of the resin in the fire-resistant resin composition is, for example, 4% by mass or more, based on the total amount of the fire-resistant resin composition. When the content of the resin is 4% by mass or more, the formability of the fire-resistant resin composition, the fire-resistant additive-retaining performance of the resin, the dispersing ability of the fire-resistant additive in the resin, etc. are favorable. This facilitates properly forming the fire-resistant resin layer on the base material. The content of the resin is more preferably 6% by mass or more, further preferably 8% by mass or more, from the viewpoint of more favorable formability of the fire-resistant resin layer, fire-resistant additive-retaining performance, dispersing ability, etc. A larger content of the resin is more preferred from the viewpoint of favorable adhesiveness of the fire-resistant resin layer to the base material. The content of the resin is still further preferably 12% by mass or more.

Also, the content of the resin is preferably 85% by mass or less, more preferably 50% by mass or less, further preferably 30% by mass or less, still further preferably 20% by mass or less. In the first embodiment of the present invention, the content of the resin equal to or less than the upper limit value allows the fire-resistant additive to be contained in a large amount.

### (Fire-resistant additive)

In the present invention, the fire-resistant additive is one or two or more selected from the group consisting of an endothermic agent, a flame retardant, and a thermally expandable layered inorganic matter. The fire-resistant additive has fire resistance and exerts fire-extinguishing performance when ignition occurs. The fire-resistant additive is dispersed in the resin in the fire-resistant laminate, and retained by the resin. The fire-resistant additive preferably comprises an endothermic agent from the viewpoint of fire resistance, fire-extinguishing performance, and adhesiveness to a resin base material. In the presence of an opening as mentioned later, the contained endothermic agent is considered to efficiently disperse water vapor generated by the contact of fire and to efficiently disperse fire spouting out of a thermally runaway battery.

### (Endothermic agent)

Specific examples of the endothermic agent for use in the fire-resistant additive include hydrated metal compounds. The hydrated metal compound is a compound having an effect of generating water vapor through its decomposition by the contact of fire, and absorbing heat. Examples of the hydrated metal compound include metal hydroxides and hydrates of metal salts. Specific examples thereof include aluminum hydroxide, magnesium hydroxide, calcium hydroxide, calcium-magnesium hydroxide, hydrotalcite, boehmite, talc, dawsonite, calcium sulfate hydrate, magnesium sulfate hydrate, and zinc borate [2ZnO·3B₂O₅3·5H₂O].

Among them, at least one member selected from the group consisting of aluminum hydroxide, magnesium hydroxide, calcium sulfate dihydrate, and magnesium sulfate heptahydrate is preferred, and aluminum hydroxide is particularly preferred, from the viewpoint of fire resistance, fire-extinguishing performance, etc.

In the first embodiment of the present invention, the endothermic agent used has, for example, a thermal decomposition onset temperature of 800°C or lower and an amount of heat absorbed of 300 J/g or larger. If either of the thermal decomposition onset temperature or the amount of heat absorbed falls outside the range described above, it is difficult to rapidly extinguish the fire of an ignited battery or the like.

The endothermic agent preferably has a thermal decomposition onset temperature of 500°C or lower and an amount of heat absorbed of 500 J/g or larger. When either of the thermal decomposition onset temperature or the amount of heat absorbed falls within the range described above, the fire of an ignited battery or the like can be rapidly extinguished.

The thermal decomposition onset temperature of the endothermic agent is preferably 500°C or lower, more preferably 400°C or lower, further preferably 300°C or lower, still further preferably 250°C or lower. When the thermal decomposition onset temperature of the endothermic agent is equal to or less than the upper limit value, the endothermic agent is rapidly decomposed at the time of ignition and is thereby capable of quickly extinguishing the fire. Also, the thermal decomposition onset temperature of the endothermic agent is, for example, 50°C or higher, preferably 100°C or higher, more preferably 150°C or higher, further preferably 180°C or higher.

The thermal decomposition onset temperature can be measured with a thermogravimeter-differential thermal analyzer (TG-DTA) and, specifically, can be measured by a method described in Examples.

The amount of heat absorbed by the endothermic agent is preferably 500 J/g or larger, more preferably 600 J/g or larger, further preferably 900 J/g or larger. When the amount of heat absorbed by the endothermic agent falls within the range described above, heat absorbability is improved. Therefore, fire resistance is more favorable. The amount of heat absorbed by the endothermic agent is usually 4000 J/g or smaller, preferably 3000 J/g or smaller, further preferably 2000 J/g or smaller.

The amount of heat absorbed can be measured using a thermogravimeter-differential thermal analyzer (TG-DTA) and, specifically, can be measured by a method described in Examples.

Examples of the compound having a thermal decomposition onset temperature of 800°C or lower and an amount of heat absorbed of 300 J/g or larger include the hydrated metal compounds described above and more specifically include aluminum hydroxide, magnesium hydroxide, calcium hydroxide, calcium sulfate dihydrate, magnesium sulfate heptahydrate, hydrotalcite, and zinc borate. These compounds are also endothermic agents having a thermal decomposition onset temperature of 500°C or lower and an amount of heat absorbed of 500 J/g or larger.

The endothermic agent preferably has an average particle size of 0.1 to 90 µm. When the average particle size falls within the range described above, the endothermic agent is easily dispersed in the resin so that the endothermic agent is easily contained in a large amount.

The average particle size of the endothermic agent is more preferably 0.5 to 60 µm, further preferably 0.8 to 40 µm, still further preferably 0.8 to 30 µm, particularly preferably 0.8 to 10 µm.

When the average particle size of the endothermic agent falls within the range described above, the dispersing ability of the endothermic agent in the fire-resistant resin composition is improved so that the endothermic agent can be uniformly dispersed in the resin and can be contained in a large amount for the resin. Furthermore, this also facilitates improving fire resistance and fire-extinguishing performance.

The average particle sizes of the endothermic agent and the flame retardant mentioned later are median size (D50) values measured with a laser diffraction/scattering particle size distribution measurement apparatus.

### (Flame retardant)

Examples of the flame retardant for use in the first embodiment of the present invention include phosphorus atom-containing compounds. Examples of the phosphorus atom-containing compound include: red phosphorus; various phosphoric acid esters such as triphenyl phosphate, tricresyl phosphate, trixylenyl phosphate, cresyl diphenyl phosphate, and xylenyl diphenyl phosphate; phosphoric acid metal salts such as sodium phosphate, potassium phosphate, and magnesium phosphate; phosphorus acid metal salts such as sodium phosphite, potassium phosphite, magnesium phosphite, and aluminum phosphite; ammonium polyphosphate; and phosphorus compounds represented by the general formula (1) given below. Use of the phosphorus-containing compound can impart proper fire resistance and fire-extinguishing performance to the fire-resistant resin layer. One of these flame retardants may be used alone, or two or more thereof may be used in combination.

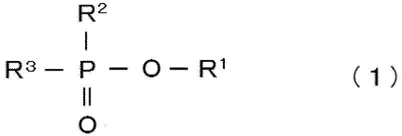

In the general formula (1), R¹ and R³ are the same or different and each represent hydrogen, a linear or branched alkyl group having 1 to 16 carbon atoms, or an aryl group having 6 to 16 carbon atoms. R² represents a hydroxy group, a linear or branched alkyl group having 1 to 16 carbon atoms, a linear or branched alkoxy group having 1 to 16 carbon atoms, an aryl group having 6 to 16 carbon atoms, or an aryloxy group having 6 to 16 carbon atoms.

Specific examples of the compound represented by the general formula (1) include methylphosphonic acid, dimethyl methylphosphonate, diethyl methylphosphonate, ethylphosphonic acid, n-propylphosphonic acid, n-butylphosphonic acid, 2-methylpropylphosphonic acid, t-butylphosphonic acid, 2,3-dimethyl-butylphosphonic acid, octylphosphonic acid, phenylphosphonic acid, dioctylphenyl phosphonate, dimethylphosphinic acid, methylethylphosphinic acid, methylpropylphosphinic acid, diethylphosphinic acid, dioctylphosphinic acid, phenylphosphinic acid, diethylphenylphosphinic acid, diphenylphosphinic acid, and bis(4-methoxyphenyl)phosphinic acid.

Among the flame retardants described above, one or two or more selected from the group consisting of a phosphoric acid ester, a phosphorus acid metal salt, and ammonium polyphosphate are preferred from the viewpoint of improving the fire resistance and fire-extinguishing performance of the fire-resistant sheet. All of these three components may be used, or two of these three components may be used. Use of a plurality of flame retardants facilitates effectively improving fire resistance and fire-extinguishing performance.

The flame retardant is preferably in a solid state at ordinary temperature (23°C) and ordinary pressure (1 atm). The average particle size of the flame retardant is preferably 1 to 200 µm, more preferably 1 to 60 µm, further preferably 3 to 40 µm, still further preferably 5 to 20 µm. When the average particle size of the flame retardant falls within the range described above, the dispersing ability of the flame retardant in the fire-resistant resin composition is improved so that the flame retardant can be uniformly dispersed in the resin and can be contained in a large amount for the resin.

### (Thermally expandable layered inorganic matter)

The thermally expandable layered inorganic matter is a heretofore known substance that expands by heating. Examples thereof include vermiculite and thermally expandable graphite. Among them, thermally expandable graphite is preferred. The thermally expandable layered inorganic matter used may be in the form of particles or in the form of flakes. The thermally expandable layered inorganic matter expands by heating to form large-volume pores, and therefore suppresses fire spreading or extinguishes fire when the fire-resistant laminate is ignited.

The thermally expandable graphite is a graphite intercalation compound produced by treating a powder such as natural flake graphite, thermally decomposable graphite, or Kish graphite with an inorganic acid and a strong oxidizing agent, and is one type of crystalline compound that maintains the layered structure of carbon. Examples of the inorganic acid include concentrated sulfuric acid, nitric acid, and selenic acid. Examples of the strong oxidizing agent include concentrated nitric acid, persulfate, perchloric acid, perchlorate, permanganate, bichromate, bichromate, and hydrogen peroxide. The thermally expandable graphite thus obtained by acid treatment may be further neutralized with ammonia, aliphatic lower amine, an alkali metal compound, an alkaline earth metal compound, or the like.

The particle size of the thermally expandable graphite is preferably a 20- to 200-mesh. When the particle size of the expandable graphite falls within the range described above, large-volume pores are easily formed by expansion. Therefore, fire resistance is improved. Furthermore, dispersing ability in the resin is also improved.

The average aspect ratio of the thermally expandable graphite is preferably 2 or more, more preferably 5 or more, further preferably 10 or more. The upper limit of the average aspect ratio of the thermally expandable graphite is not particularly limited and is preferably 1,000 or less from the viewpoint of the prevention of breaking of the thermally expandable graphite. When the average aspect ratio of the thermally expandable graphite is 2 or more, large-volume pores are easily formed by expansion. Therefore, fire retardancy is improved.

The average aspect ratio of the thermally expandable graphite is determined by measuring the maximum dimension (major axis) and the minimum dimension (minor axis) as to each of ten particles of the thermally expandable graphite, dividing the maximum dimension (major axis) by the minimum dimension (minor axis), and using a mean of the obtained values as the average aspect ratio. The major axis and minor axis of the thermally expandable graphite can be measured using, for example, a field emission scanning electron microscope (FE-SEM).

### (Content of fire-resistant additive)

The content of the fire-resistant additive in the fire-resistant resin composition is, for example, 50 to 2500 parts by mass, per 100 parts by mass of the resin. 50 parts by mass or more of the fire-resistant additive can impart proper fire resistance and fire-extinguishing performance to the fire-resistant laminate. Also, 2500 parts by mass or less of the fire-resistant additive can allow the fire-resistant resin layer to contain the resin at equal to or more than a given percentage. Therefore, the fire-resistant additive is capable of being properly dispersed in the resin of the fire-resistant resin layer. Hence, formability is favorable, and furthermore, adhesiveness to the base material is also favorable.

The content of the fire-resistant additive is preferably 100 parts by mass or more, more preferably 250 parts by mass or more, further preferably 400 parts by mass or more, per 100 parts by mass of the resin from the viewpoint of improving fire resistance and fire-extinguishing performance. Also, the content of the fire-resistant additive is preferably 2100 parts by mass or less, more preferably 1600 parts by mass or less, further preferably 1100 parts by mass or less, per 100 parts by mass of the resin from the viewpoint of formability and dispersing ability, and is particularly preferably 750 parts by mass or less from the viewpoint of adhesiveness to the base material.

One of the three components, i.e., the endothermic agent, the flame retardant, and the thermally expandable layered inorganic matter, may be used alone as the fire-resistant additive, or two of these components may be used in combination. Specifically, the endothermic agent and the flame retardant may be used in combination; the flame retardant and the thermally expandable layered inorganic matter may be used in combination; or the endothermic agent and the thermally expandable layered inorganic matter may be used in combination. Alternatively, all of the endothermic agent, the flame retardant, and the thermally expandable layered inorganic matter may be used.

In the case of using two or more components in combination, among others, the flame retardant and at least one of the thermally expandable layered inorganic matter and the endothermic agent are preferably used in combination, and the flame retardant and the endothermic agent are more preferably used in combination. Such use in combination facilitates further improving the fire-extinguishing performance of the fire-resistant laminate. For the use in combination, the total content of the fire-resistant additives can fall within the range described above. The content of at least one of the thermally expandable layered inorganic matter and the endothermic agent is preferably larger than that of the flame retardant. For example, preferably, the content of the flame retardant is 1 to 200 parts by mass while the content of at least one of the thermally expandable layered inorganic matter and the endothermic agent is 49 to 2400 parts by mass, per 100 parts by mass of the resin.

Preferably, the content of the flame retardant is 2 to 100 parts by mass while the content of at least one of the thermally expandable layered inorganic matter and the endothermic agent is 98 to 2000 parts by mass. More preferably, the content of the flame retardant is 5 to 100 parts by mass while the content of at least one of the thermally expandable layered inorganic matter and the endothermic agent is 240 to 1500 parts by mass. Further preferably, the content of the flame retardant is 5 to 50 parts by mass while the content of at least one of the thermally expandable layered inorganic matter and the endothermic agent is 300 to 1000 parts by mass. Particularly preferably, the content of the flame retardant is 5 to 30 parts by mass while the content of at least one of the thermally expandable layered inorganic matter and the endothermic agent is 380 to 720 parts by mass.

### (Inorganic filler)

The fire-resistant resin composition of the first embodiment of the present invention may further contain an inorganic filler other than the endothermic agent, the flame retardant, and the thermally expandable layered inorganic matter serving as the fire-resistant additive described above. Examples of the inorganic filler other than the fire-resistant additive include, but are not particularly limited to: metal oxides such as alumina, zinc oxide, titanium oxide, calcium oxide, magnesium oxide, iron oxide, tin oxide, antimony oxide, and ferrite; metal compounds other than hydrated metal compounds, such as calcium carbonate; and others such as glass fiber, aluminum nitride, boron nitride, silicon nitride, carbon black, graphite, carbon fiber, charcoal powders, various metal powders, silicon carbide, stainless fiber, various magnetic powders, slag fiber, fly ash, and dewatered sludge. These inorganic fillers may each be used alone or may be used in combination of two or more thereof.

The average particle size of the inorganic filler is preferably 0.5 to 100 µm, more preferably 1 to 50 µm. When the content of the inorganic filler is small, a small particle size is preferred from the viewpoint of improving dispersing ability. When the content is large, a large particle size is preferred because the formability of the fire-resistant resin composition is reduced due to its viscosity elevated as high filling proceeds.

When the fire-resistant resin composition of the first embodiment of the present invention contains the inorganic filler other than the fire-resistant additive, the content thereof is preferably 10 to 300 parts by mass, more preferably 10 to 200 parts by mass, per 100 parts by mass of the resin. When the content of the inorganic filler falls within the range described above, the mechanical physical properties of the fire-resistant resin layer can be improved.

### (Plasticizer)

The fire-resistant resin composition of the first embodiment of the present invention may further contain a plasticizer. Particularly, when the resin component is polyvinyl chloride resin or polyvinyl acetal resin, the fire-resistant resin composition preferably contains a plasticizer from the viewpoint of improving formability, etc.

The plasticizer is not particularly limited as long as the plasticizer is generally used in combination with polyvinyl chloride resin or polyvinyl acetal resin. Specific examples thereof include: phthalic acid ester plasticizers such as di-2-ethylhexyl phthalate (DOP), dibutyl phthalate (DBP), diheptyl phthalate (DHP), and diisodecyl phthalate (DIDP); fatty acid ester plasticizers such as di-2-ethylhexyl adipate (DOA), diisobutyl adipate (DIBA), and dibutyl adipate (DBA); epoxidized ester plasticizers such as epoxidized soybean oil; adipic acid ester plasticizers such as adipic acid ester and adipic acid polyester; trimellitic acid ester plasticizers such as tri-2-ethylhexyl trimellitate (TOTM) and triisononyl trimellitate (TINTM); and process oils such as mineral oil. One of these plasticizers may be used alone, or two or more thereof may be used in combination.

When the fire-resistant resin composition of the first embodiment of the present invention contains the plasticizer, the content of the plasticizer is preferably 1 to 60 parts by mass, more preferably 5 to 50 parts by mass, further preferably 10 to 40 parts by mass, per 100 parts by mass of the resin. When the content of the plasticizer falls with the range described above, formability tends to be improved. Furthermore, the fire-resistant resin layer can be prevented from being too soft.

### (Other components)

The fire-resistant resin composition of the first embodiment of the present invention can optionally contain an additive component other than those described above without impairing the objects of the present invention. The type of this additive component is not particularly limited, and various additives can be used. Examples of such additives include lubricants, anti-shrinkage agents, crystal nucleating agents, colorants (pigments, dyes, etc.), ultraviolet absorbers, antioxidants, antiaging agents, flame retardant aids, antistatic agents, surfactants, vulcanizing agents, dispersants, and surface treatment agents. The amount of the additive added can be appropriately selected without impairing formability, etc. These additives may each be used alone or may be used in combination of two or more thereof.

When the base material has a hole as in the second embodiment mentioned later, the fire-resistant resin layer may have a hole that communicates with the hole of the base material. The thickness of the fire-resistant resin layer is, for example, 2 to 5000 µm, preferably 10 to 2000 µm, more preferably 20 to 500 µm, further preferably 35 to 150 µm. In the present specification, the "thickness" of the fire-resistant resin layer (fire-resistant sheet) refers to an average thickness from 3 points in the width direction of the fire-resistant sheet.

When the thickness of the fire-resistant resin layer is equal to or more than the lower limit value, proper fire resistance and fire-extinguishing performance can be easily imparted to the fire-resistant laminate. When the thickness is equal to or less than the upper limit value, the fire-resistant laminate is prevented from having a thickness larger than necessary, and easily applied to small batteries for use in mobile devices such as mobile phones or smartphones. The thickness of the fire-resistant resin layer described above is the thickness of each fire-resistant resin layer when the fire-resistant resin layers are disposed on both sides of the base material.

### [Base material]

In the first embodiment of the present invention, a base material having a softening point or a melting point of 300°C or higher is used as the base material. A base material having a softening point or a melting point of lower than 300°C cannot effectively function as a support when ignition occurs. Hence, the fire-resistant additive cannot be secured at a predetermined location so that the fire resistance and fire-extinguishing performance of the fire-resistant laminate are reduced.

The softening point or melting point of the base material is preferably 450°C or higher, more preferably 600°C or higher, further preferably 850°C or higher, particularly preferably 1400°C or higher, from the viewpoint of much better fire resistance and fire-extinguishing performance.

A higher softening point or melting point of the base material is more preferred. The softening point or melting point is, for example, 5000°C or lower and is 3000°C or lower for practical use.

The base material is formed from a resin, a metal, a non-metal inorganic material, or a complex thereof, etc. Among them, a metal is preferred. The form of the base material may be a film, a foil, or the like or may be a cloth, a mesh, or the like. Thus, examples thereof include resin films, metal foils, metal cloths, metal meshes, organic fiber cloths, and non-metal inorganic material cloths (inorganic fiber cloths).

Examples of the resin film include polyamide imide resin films, polyimide resin films, polybenzimidazole (PBI) resin films, polyether ether ketone (PEEK) resin films, polytetrafluoroethylene (PTFE) resin films, polyphenylene sulfide resin films, and resin films containing two or more of these resins. Among them, a polyimide resin film is preferred. Use of the polyimide resin film easily attains favorable adhesiveness to the fire-resistant resin layer. Since the polyimide resin film has high heat resistance, use thereof facilitates effectively functioning as a support even at the time of ignition.

Examples of the metal include zinc, gold, silver, chromium, titanium, iron, aluminum, copper, nickel, tantalum and alloys containing these metals. Examples of the alloy include stainless such as SUS, brass, beryllium copper, and Inconel. One of these metals may be used alone, or two or more thereof may be used in combination. The metal may be a metal cloth, may be a metal mesh, or may be a metal foil. The metal foil may have a plurality of holes made by punching or the like. The metal mesh or the punched metal foil can effectively exert functions as a support in spite of being lightweight.

The cloth may be a metal cloth as well as an inorganic fiber cloth such as a glass fiber cloth or a carbon fiber cloth, an organic fiber cloth such as an aramid fiber cloth, a PBO (poly-p-phenylene benzoxazole) fiber cloth, a polyimide fiber cloth, a PEEK fiber cloth, or a PBI fiber cloth, or a cloth containing two or more selected from the group consisting of these inorganic fibers and organic fibers. The cloth may be a woven fabric, may be a knitted fabric, or may be nonwoven fabric.

Among those described above, a metal base material formed from a metal, such as a metal foil, a metal mesh, or a metal cloth, a non-metal inorganic fiber cloth such as a glass fiber cloth, a resin film, or the like is preferred, and a metal base material, particularly, a metal foil, is preferred, from the viewpoint of achieving both fire-extinguishing performance and adhesiveness to the fire-resistant resin layer.

The metal is preferably one or more selected from the group consisting of copper, aluminum, stainless, and nickel. Among them, one or more selected from the group consisting of stainless and nickel are more preferred for enhancing tensile strength and effectively improving a supporting function. The inorganic fiber cloth is preferably a glass fiber cloth. The resin film is preferably a polyimide resin film.

The ratio of the thickness of the fire-resistant resin layer to the thickness of the base material is not particularly limited and is preferably 2/8 to 9/1, more preferably 3/7 to 7/1, further preferably 4/6 to 6/1. When the thickness ratio falls within the range described above, the balance between the thicknesses of the fire-resistant laminate and the base material is favorable so that favorable fire resistance and fire-extinguishing performance can be obtained without increasing the thickness of the fire-resistant laminate more than necessary.

The thickness of the base material is not particularly limited and is preferably 2 to 1000 µm, preferably 5 to 500 µm, more preferably 8 to 200 µm, further preferably 12 to 90 µm.

When the thickness is equal to or more than the lower limit value, the fire-resistant resin layer is easily supported by the base material even at the time of ignition. When the thickness is equal to or less than the upper limit value, the base material easily exerts favorable performance without having a thickness larger than necessary. Furthermore, such a thin base material imparts flexibility to the fire-resistant laminate and allows the fire-resistant laminate to conform to battery surface, for example, even if the battery surface has a curve or has projections and depressions.

The tensile strength at 200°C of the base material is preferably 3 GPa or more. When the tensile strength at 200°C is 3 GPa or more, the base material is capable of sufficiently exerting functions as a support when the fire-resistant laminate is ignited or heated to a high temperature. The tensile strength is more preferably 8 GPa or more, further preferably 40 GPa or more, still further preferably 50 GPa or more. The upper limit value of the tensile strength is not particularly limited, and is, for example, 1000 GPa and is 500 GPa for practical use.

The tensile strength at 200°C of the base material is measured at a pulling rate of 20 mm/min using an autograph in conformity to JIS 7113.

The softening point or melting point of the base material differs in measurement method depending on the material used, and means a softening point measured with a thermomechanical analyzer (TMA), for example, when the base material is formed from an organic material such as a resin. Specifically, "TMA-6000" manufactured by Seiko Instruments Inc. is used. A film having a thickness of 30 µm was prepared and cut out into 3 mm × 15 mm. This sample is loaded to the apparatus and heated under a condition of 5°C/min. A temperature at which the sample starts to be displaced downward under a load of 5 g is regarded as the softening point.

The softening point or melting point of the base material means a melting point measured by differential scanning calorimetry (DSC) when the base material is formed from an inorganic material such as a metal. Specifically, "LABSYS EVO" manufactured by Setaram Instrumentation SAS is used. A sample is heated under a condition of 20°C/min in an argon atmosphere. A temperature at which an endothermic peak is observed is regarded as the melting point.

When the base material is formed from a composite material of an organic material and an inorganic material, a sample is measured by DSC described above. If two peaks are observed, a higher melting point measured by the differential scanning calorimetry (DSC) is meant. As for a material having neither a melting point nor a softening point (i.e., a material whose softening point or the like cannot be measured by the methods described above), the melting point or softening point in the present specification is defined as a decomposition temperature at which the base material is decomposed in measurement by the differential scanning calorimetry (DSC).

### (Second embodiment)

Next, differences from the first embodiment will be described about the second embodiment of the present invention. In the second embodiment, a base material having one or two or more holes is used as the base material. Hereinafter, the fire-resistant laminate of the second embodiment of the present invention comprises a base material and a fire-resistant resin layer disposed on at least one side of the base material, as in the first embodiment. In the second embodiment, the base material has one or two or more holes. In this respect, the aperture ratio of the base material is selected within the range of 5 to 60%.

In the present invention, the fire-resistant resin layer has a predetermined fire-resistant additive and can thereby exhibit given fire resistance and fire-extinguishing performance. In the second embodiment, the base material of the fire-resistant laminate of the present invention has a hole. In the fire-resistant laminate of the present invention, the hole disposed in the base material can reduce the force of fire by efficiently dispersing fire spouting out of a battery.

In the second embodiment of the present invention, the aperture ratio of the base material is 5 to 60%. The aperture ratio is preferably 7 to 58%. The aperture ratio is more preferably 8 to 55%. If the aperture ratio is less than 5%, the hole can neither efficiently disperse water vapor generated by the contact of an endothermic agent with fire, nor reduce the force of fire by efficiently dispersing fire spouting out of a battery. If the aperture ratio is larger than 60%, the base material cannot support the fire-resistant resin layer when fire spouts out of a battery.

The aperture ratio of the base material of the fire-resistant laminate of the present invention is the ratio of the area of the hole to the area of the whole base material including the hole when the base material is planarly viewed.

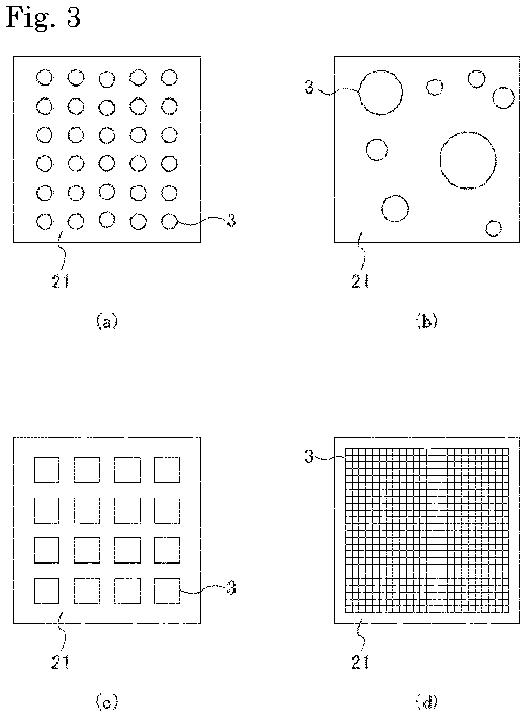

The shape and arrangement of the hole disposed in the base material are not limited to specific ones. The hole having an arbitrary shape is arbitrarily arranged as long as the aperture ratio of the base material is 5 to 60%. For example, as shown in Fig. 3(a), round holes 3 may be regularly arranged in the base material 21. As shown in Fig. 3(b), round holes 3 may be irregularly arranged. As shown in Fig. 3(c), tetragonal holes 3 may be regularly arranged. As shown in Fig. 3(d), net-like holes may be arranged.

The hole 3 disposed in the base material 21 is not particularly limited as long as the hole is formed so as to penetrate the base material. The hole 3 may be a hole formed by punching or the like in a metal foil, a cloth, etc. Alternatively, the hole 3 in a mesh, etc. may be a hole constituted by a gap formed between wire rods constituting the mesh, and the hole 3 in a cloth may be a hole constituted by a gap formed between fibers.

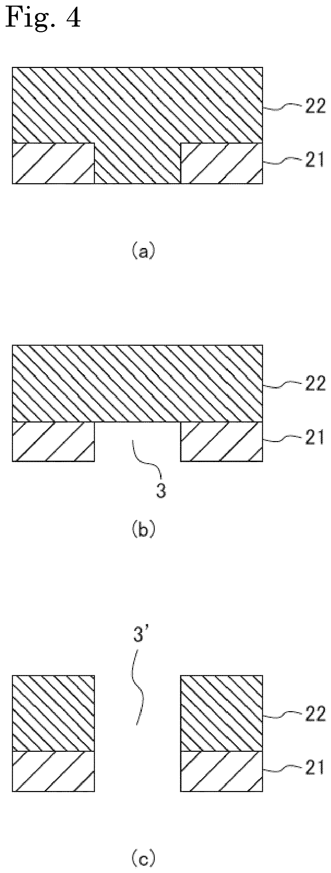

As shown in Fig. 4(a), the inside of the hole 3 disposed in the base material 21 may be completely infilled with the fire-resistant resin layer 22, or a part of the inside of the hole may be infilled with the fire-resistant resin layer 22 (not shown). As shown in Fig. 4(b), the hole 3 disposed in the base material 21 may be covered with the fire-resistant resin layer 22, though the inside thereof may not be infilled with the fire-resistant resin layer 22. As shown in Fig. 4(c), hole 3' which communicates the base material 21 with the fire-resistant resin layer 22 may be disposed.

In the second embodiment, the base material is similar to that of the first embodiment described above. In the second embodiment, the base material may be other than the base material having a softening point or a melting point of 300°C or higher.

### <Production method>

The fire-resistant laminates of the first and second embodiments of the present invention can be produced, for example, by extrusion-forming the fire-resistant resin composition and thereby forming the fire-resistant resin layer on one side or both sides of the base material. Alternatively, the fire-resistant laminate of the present invention may be produced by coating one side or both sides of the base material with a dilution of the fire-resistant resin composition diluted with a solvent, drying the dilution, and thereby forming the fire-resistant resin layer on one side or both sides of the base material.

The fire-resistant laminate of the present invention may be produced by laminating the fire-resistant resin composition prepared into a sheet in advance as the fire-resistant resin layer to one side or both sides of the base material by pressure bonding or the like. The fire-resistant resin composition in the form of a sheet (fire-resistant resin layer) may be formed on, for example, a release sheet, by extrusion forming or the like, or may be formed by coating a release sheet with a dilution of the fire-resistant resin composition, followed by drying.

In the case of forming fire-resistant resin layers on both sides of the base material, the fire-resistant resin layers on both sides may be formed at the same time, or may be formed sequentially.

In the present invention, it is preferred to form the fire-resistant resin layer using a dilution of the fire-resistant resin composition diluted with a solvent. In the case of using a dilution, the resin is usually a thermoplastic resin, preferably polyvinyl acetal resin.

The fire-resistant resin composition is obtained by mixing the resin, the fire-resistant additive, and an optional component using a known mixing apparatus such as a bead mill, a ball mill, a Banbury mixer, a kneader mixer, a kneading roll, a stone mill, or a planetary centrifugal mixer. In the case of diluting the fire-resistant resin composition with a solvent, the dilution of the fire-resistant resin composition can be obtained by further adding the solvent thereto, and mixing them using the mixing apparatus.

Examples of the solvent for use in diluting the fire-resistant resin composition include, but are not particularly limited to: aliphatic hydrocarbon solvents such as n-pentane, n-hexane, n-heptane, and cyclohexane; aromatic hydrocarbon solvents such as toluene; ester solvents such as ethyl acetate and n-butyl acetate; ketone solvents such as acetone and methyl ethyl ketone (MEK); and alcohol solvents such as ethanol, isopropyl alcohol, and butanol.

The dilution of the fire-resistant resin composition is usually slurry in which the resin is dissolved in the solvent while the fire-resistant additive is dispersed in the solvent. In the case of preparing slurry, for example, an inorganic powder containing a solvent, a dispersant, and an endothermic material is first stirred with a dispersion mixer such as a bead mill to prepare an inorganic dispersion. Then, a solution of the resin dissolved in a solvent in advance is added to the inorganic dispersion, and the mixture can be further stirred with the dispersion mixer to prepare a dilution of the fire-resistant resin composition.

The solid content concentration of the dilution of the fire-resistant resin composition is, for example, 30 to 70% by mass, preferably 35 to 65% by mass, more preferably 40 to 60% by mass. When the solid content concentration is equal to or more than the lower limit value, a resin composition layer can be efficiently formed. When the solid content concentration is equal to or less than the upper limit value, the resin is easily dissolved in the solvent while the fire-resistant additive is easily dispersed in the solvent.

In the method for producing the fire-resistant laminate of the second embodiment of the present invention, a hole is preferably disposed in advance in the base material to be laminated with the fire-resistant resin composition such that the aperture ratio is 5 to 60%. In this case, the hole disposed in the base material is completely infilled with the fire-resistant resin composition or partially infilled with the fire-resistant resin composition.

In the method for producing the fire-resistant laminate of the second embodiment of the present invention, the fire-resistant resin composition and the base material having no hole may be laminated with each other, and then, a hole that communicates the base material with the fire-resistant resin composition can be established by punching or the like. In this case, the hole disposed in the base material is not infilled with the fire-resistant resin composition.

### [Pressure-sensitive adhesive material]

The fire-resistant laminate of each embodiment of the present invention may have a pressure-sensitive adhesive material. When the fire-resistant resin layer is disposed on only one side of the base material, the pressure-sensitive adhesive material may be disposed on the other side of the base material or may be disposed on the fire-resistant resin layer, and is preferably disposed on the fire-resistant resin layer. In the case of laminating the fire-resistant laminate having the pressure-sensitive adhesive material disposed on the fire-resistant resin layer with a battery via the pressure-sensitive adhesive material, the fire-resistant resin layer and the base material are arranged in the presented order from the battery side. Such arrangement facilitates enhancing fire-extinguishing performance as mentioned later.

When the fire-resistant resin layers are disposed on both sides of the base material, the pressure-sensitive adhesive material may be disposed on one of the fire-resistant resin layers or may be disposed on both the fire-resistant resin layers, and is preferably disposed on both the fire-resistant resin layers. For example, when the fire-resistant laminate is arranged between two battery cells, the fire-resistant laminate can be laminated with both the battery cells through the pressure-sensitive adhesive material disposed on both the fire-resistant resin layers.

The pressure-sensitive adhesive material may consist of a pressure-sensitive adhesive layer or may be a pressure-sensitive adhesive double sided tape with pressure-sensitive adhesive layers disposed on both the surfaces of a base material, and preferably consists of a pressure-sensitive adhesive layer. The pressure-sensitive adhesive double sided tape is laminated onto the fire-resistant laminate by the lamination of one of the pressure-sensitive adhesive layers with the fire-resistant laminate so as to constitute the pressure-sensitive adhesive material.

Examples of the pressure-sensitive adhesive constituting the pressure-sensitive adhesive layer include, but are not particularly limited to, acrylic pressure-sensitive adhesives, urethane pressure-sensitive adhesives, and rubber pressure-sensitive adhesives. The thickness of the pressure-sensitive adhesive material is not particularly limited and is, for example, 3 to 500 µm, preferably 10 to 200 µm.

A known base material for use in pressure-sensitive adhesive double sided tapes, such as a resin film or a nonwoven fabric, is preferably used as the base material for use in the pressure-sensitive adhesive double sided tape.

### [Battery]

The fire-resistant laminate of each embodiment of the present invention is preferably used in a battery. The battery usually has at least one battery cell, and the fire-resistant laminate is preferably arranged on the surface of the battery cell. For the fire-resistant laminate, it is preferred that the fire-resistant resin layer should face the battery cell side. Specifically, the fire-resistant laminate is preferably disposed such that the fire-resistant resin layer and the base material are arranged in the presented order from the battery cell side. The fire-resistant resin layer facing the battery cell can quickly extinguish the fire of ignition when the battery cell is ignited. The battery may have one battery cell or may have two or more battery cells.

The battery cell refers to a constituent unit of a battery containing a positive electrode material, a negative electrode material, a separator, a positive electrode terminal, and a negative electrode terminal, etc. in an exterior member. The battery cell is classified according to the shape of the cell into cylindrical, square, and laminated types.

The cylindrical battery cell refers to a constituent unit of a battery containing a positive electrode material, a negative electrode material, a separator, a positive electrode terminal, a negative electrode terminal, an insulating material, a safety valve, a gasket, and a positive electrode cap, etc. in an exterior can. On the other hand, the square battery cell refers to a constituent unit of a battery containing a positive electrode material, a negative electrode material, a separator, a positive electrode terminal, a negative electrode terminal, an insulating material, and a safety valve, etc. in an exterior can. The laminated battery cell refers to a constituent unit of a battery containing a positive electrode material, a negative electrode material, a separator, a positive electrode terminal, and a negative electrode terminal, etc. in an exterior film. In the laminated battery, the positive electrode material, the negative electrode material, the separator, the positive electrode terminal, and the negative electrode terminal, etc. are arranged between two exterior films, or between two folds of one exterior film folded in half, for example, and the outer edge parts of the exterior film(s) are pressure-bonded by heat sealing. Examples of the exterior film include an aluminum film laminated with a polyethylene terephthalate film.

The battery cell is a secondary cell such as a lithium ion cell, a lithium ion polymer cell, a nickel-hydrogen cell, a lithium-sulfur cell, a nickel-cadmium cell, a nickel-iron cell, a nickel-zinc cell, a sodium-sulfur cell, a lead storage battery, or an air cell. Among them, a lithium ion cell is preferred.

The battery is used in, for example, but not limited to, small electronic equipment such as mobile phones and smartphones, notebook computers, and automobiles.

The fire-resistant laminate is preferably disposed on any surface of the battery cell, and preferably covers a large part (e.g., 40% or more, preferably 50% or more, more preferably 70% or more of the surface area) of the surface of the battery cell. The covering of a large part of the surface with the fire-resistant laminate facilitates quickly extinguishing the fire of ignition of the battery cell.

The battery cell often has a safety valve. In the case of having a safety valve, the fire-resistant laminate is preferably disposed so as to cover the safety valve. In this respect, the fire-resistant laminate preferably covers the safety valve so as not to hermetically seal the safety valve, in order to ensure the functions of the safety valve. For the laminated battery cell, the fire-resistant laminate is preferably disposed so as to cover a heat-sealed part where the edge parts are pressure-bonded by heat sealing.

Since the battery cell is often ignited from the safety valve or the heat-sealed part, the covering of these sites with the fire-resistant laminate facilitates effectively extinguishing the fire of ignition of the battery cell.

The fire-resistant laminate is more preferably arranged so as to cover a large part of the surface of the battery cell and, in the case of having a safety valve or a heat-sealed part, to also cover the safety valve or the heat-sealed part. For example, the fire-resistant laminate is preferably arranged such that the fire-resistant laminate is wound around the battery cell.

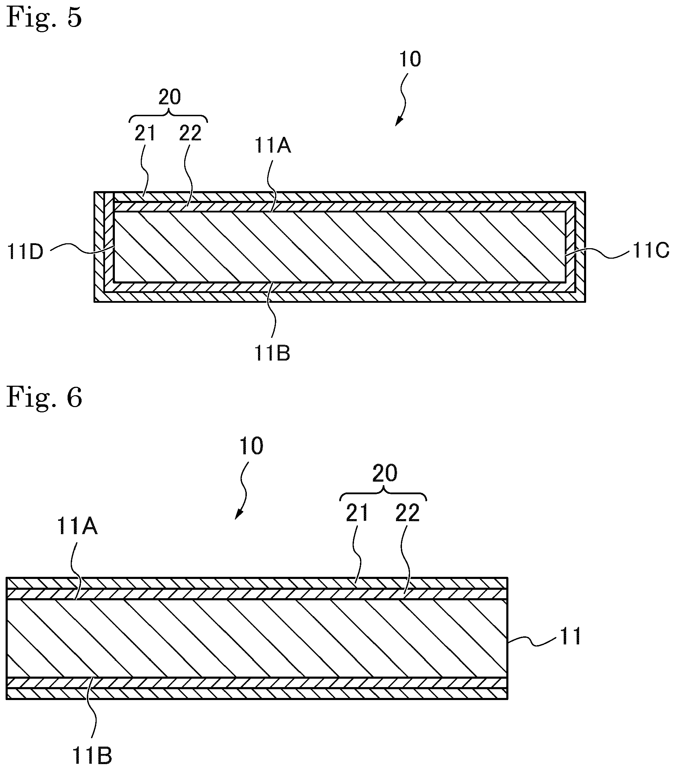

For example, as shown in Fig. 5, for square battery cell 11, the fire-resistant laminate 20 is arranged so as to wrap the outer periphery of the battery cell 11, and preferably arranged on, for example, principal surfaces 11A, 11B and end faces 11C, 11D of the battery cell 11. The principal surfaces 11A, 11B are both surfaces having the largest area in the square battery cell 11, and the end faces 11C, 11D are end faces that connect the principal surfaces 11A, 11B. In the square cell, a safety valve (not shown) is generally disposed in any of the end faces 11C, 11D. Therefore, in the configuration of Fig. 5, the fire-resistant laminate 20 also covers the safety valve of the battery cell 11.

For example, as shown in Fig. 6, for square battery cell 11, the fire-resistant laminate 20 may be disposed only on both the principal surfaces 11A, 11B. Alternatively, the fire-resistant laminate 20 may be disposed on only one of the principal surfaces 11A, 11B.

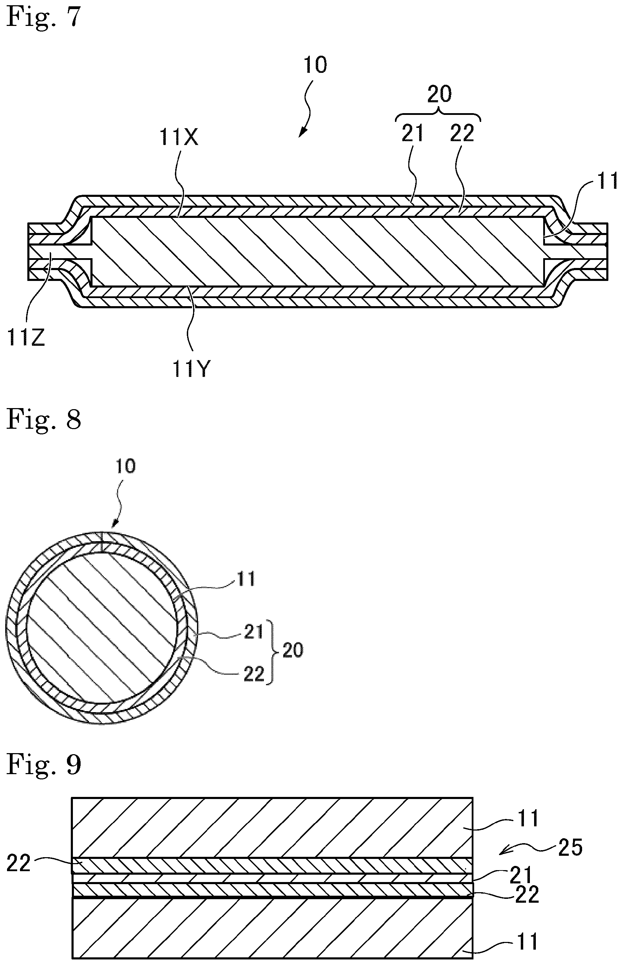

For laminated battery cell 11, as shown in Fig. 7, the fire-resistant laminate 20 is preferably disposed so as to cover, for example, each of both surfaces 11X, 11Y of the battery cell 11. In this respect, the fire-resistant laminate 20 is preferably arranged so as to also cover heat-sealed part 11Z. In the laminated battery cell as well, the fire-resistant laminate 20 may be disposed so as to cover only one surface 11X. Alternatively, in the laminated battery cell as well, the fire-resistant laminate 20 may be arranged such that the fire-resistant laminate is wound around the outer periphery of the battery cell 11.

As shown in Fig. 8, for cylindrical battery cell 11, the fire-resistant laminate 20 can be arranged so as to wrap the outer periphery of the battery cell 11.

As shown in Figs. 5 to 8, the fire-resistant laminate 20 is arranged such that the fire-resistant resin layer 22 side faces the surface of the battery cell 11. Thus, preferably, the fire-resistant resin layer 22 and the base material 21 are arranged in the presented order from the battery cell 11. Such arrangement allows the fire-resistant resin layer 22 to quickly extinguish the fire of ignition when the battery cell 11 is ignited.

The fire-resistant laminate 20 may be allowed to adhere to the battery cell 11 via a pressure-sensitive adhesive material disposed on one side of the fire-resistant laminate 20. Specifically, the fire-resistant laminate 20 may be attached to the battery cell 11 via a pressure-sensitive adhesive material arranged on the surface of the fire-resistant resin layer 22.

When a plurality of battery cells 11 are disposed in the battery as shown in Fig. 9, fire-resistant laminate 25 with fire-resistant resin layers 22, 22 disposed on both sides of base material 21 is preferably arranged between the battery cells 11, 11. In this case, the fire-resistant laminate 25 is preferably arranged such that each fire-resistant resin layer 22 faces each battery cell 11. Specifically, the battery cell 11, the fire-resistant resin layer 22, the base material 21, the fire-resistant resin layer 22, and the battery cell 11 are arranged in the presented order. Such a configuration can prevent chain ignition of the adjacent battery cells 11, because the fire-resistant laminate 25 effectively extinguishes fire even if one battery cell 11 is ignited by thermal runaway.

In the battery shown in Fig. 9, only two battery cells 11 are schematically shown. However, three or more battery cells may be disposed therein. In this case, each fire-resistant laminate 25 is preferably arranged according to the configuration described above between the battery cells 11, 11.

The batteries shown in Figs. 5 to 9 merely illustrate one example of the battery configuration, and various modes may be adopted. For example, even when a plurality of battery cells 11 are disposed as shown in Fig. 9, fire-resistant laminate 20 with fire-resistant resin layer 22 disposed on one side may be used. Although the plurality of battery cells 11 shown in Fig. 9 are square battery cells 11, the configuration of the battery cells 11 is not limited thereto and may be laminated battery cells, etc.

In the battery according to one mode of the present invention, as described above, the battery cell is covered with the fire-resistant laminate comprising a base material and a fire-resistant resin layer disposed on at least one side of the base material.

In another mode of the present invention, the coverage of the battery cell with the base material in the battery is 40 to 95%. The coverage means the percentage of a surface part of the battery cell covered with the base material. A part where a hole is disposed in the base material and the surface of the battery cell is not covered with the base material due to the hole is regarded as a part uncovered with the base material. As a matter of course, a part where the fire-resistant laminate is absent on the surface of the battery cell is also regarded as a part uncovered with the base material.

In the battery of another mode of the present invention described above, the coverage is preferably 45 to 90%. The coverage is more preferably 50 to 85%. If the coverage is less than 40%, the fire-resistant resin layer is not sufficiently supported by the base material, or the battery cell is not sufficiently covered with the fire-resistant laminate so that the fire-resistant laminate having high fire resistance and fire-extinguishing performance does not exert functions. If the coverage exceeds 95%, neither can water vapor, etc. generated by the contact of the endothermic agent with fire be efficiently dispersed, nor the force of fire can be reduced by efficiently dispersing fire spouting out of the battery.

The fire-resistant laminate for use in the battery having the coverage of the present invention described above that falls within the predetermined range may be the fire-resistant laminate of the second embodiment of the present invention described above, or may be a fire-resistant laminate comprising a base material having a hole with an aperture ratio of larger than 0% and less than 5%. Alternatively, the fire-resistant laminate may be a fire-resistant laminate comprising a base material having an aperture ratio of 0%, i.e., a fire-resistant laminate having no hole. The base material having an aperture ratio of larger than 0% has the same configuration, except for the aperture ratio, as that of the fire-resistant laminate of the second embodiment of the present invention described above. The fire-resistant laminate having no hole is the same as the fire-resistant laminate of the second embodiment of the present invention except that no hole is disposed in the base material. Thus, the description about these fire-resistant laminates is omitted.

In an mode with the coverage that falls within the predetermined range, the battery is also preferably arranged on the surface of each battery cell, as illustrated in Figs. 5 to 8. An arrangement method therefor is as described above, so that the description thereabout is omitted.

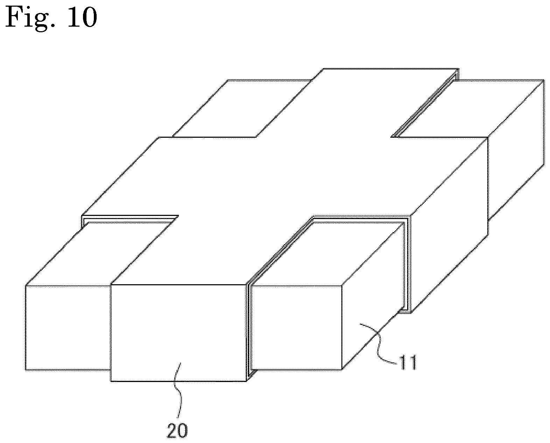

In the battery of the mode with the coverage that falls within the predetermined range, for example, as shown in Fig. 10, for square battery cell 11, the fire-resistant laminate 20 may be disposed on a part, except for four corners, of the battery cell 11. The number of corners without the fire-resistant laminate 20 of the square battery cell may be one, may be two, or may be three, although not shown in the drawing. The fire-resistant laminate 20 is preferably disposed on a part, except for four corners, of the battery cell 11, from the viewpoint of efficient dispersion of water vapor, etc. generated by the contact of the endothermic agent with fire.

In the battery of the mode with the coverage that falls within the predetermined range, the base material 21 may or may not have a hole in each configuration shown in Figs. 5 to 8 and 10. However, in the battery having the coverage that falls within the predetermined range, the base material 21 preferably has a hole from the viewpoint of allowing combustible gas to efficiently escape to the outside so that the fire-resistant resin layer 22 can suppress ignition. When the base material 21 has no hole, the battery cell can be partially covered with the fire-resistant resin layer 20 (i.e., the base material 21).

In the battery of the mode with the coverage that falls within the predetermined range, the fire-resistant laminate 20 is also arranged such that the fire-resistant resin layer 22 side faces the surface of the battery cell 11. Thus, preferably, the fire-resistant resin layer 22 and the base material 21 are arranged in the presented order from the battery cell 11. Such arrangement allows the fire-resistant resin layer 22 to quickly extinguish the fire of ignition when the battery cell 11 is ignited.

In the battery of the mode with the coverage that falls within the predetermined range, the fire-resistant laminate 20 may also be allowed to adhere to the battery cell 11 via a pressure-sensitive adhesive material disposed on one side of the fire-resistant laminate 20. Specifically, the fire-resistant laminate 20 may be attached to the battery cell 11 via a pressure-sensitive adhesive material arranged on the surface of the fire-resistant resin layer 22.

The batteries shown in Figs. 5 to 8 and 10 merely illustrate one example of the battery configuration in the mode with the coverage that falls within the predetermined range, and various modes may be adopted. When the battery cell is covered with the fire-resistant laminate of the present invention, a hole disposed in the base material or a hole disposed to communicate the base material with the fire-resistant resin layer is not shown in Figs. 5 to 8 and 10.

Examples using the fire-resistant laminate of each embodiment of the present invention in the battery are mentioned above. In the present invention, the fire-resistant laminate of each embodiment of the present invention may be used as an exterior film constituting the battery cell.

The exterior film is usually configured such that a base material layer, a barrier layer and a sealant layer are laminated in the presented order, if necessary, via an adhesive layer. The base material layer is a layer constituting the outmost layer of the exterior film, and is required to have insulating properties. In general, nylon, polyester, or the like is used. The barrier layer is disposed for improving the strength of the exterior film or preventing water vapor, oxygen, light, etc. from entering the inside of the battery. In general, a metal (e.g., aluminum, stainless, or titanium) foil, an inorganic compound vapor-deposited film, or the like are used. The sealant layer is positioned in the innermost layer of the exterior film and disposed for hermetically sealing each contained member by the thermal welding of the sealant layer.

In the case of constituting an exterior film using the fire-resistant laminate of each embodiment of the present invention, the fire-resistant resin layer can be arranged between the base material layer and the barrier layer, between the barrier layer and the sealant layer, or at a combination of these positions. In this case, the barrier layer may be used as the base material constituting the fire-resistant laminate of each embodiment of the present invention.

In a more preferred mode, the fire-resistant resin layer is preferably disposed at least between the barrier layer and the sealant layer. If ignition occurs in the battery cell, the fire can be quickly extinguished.

The fire-resistant laminate of each embodiment of the present invention may be arranged between the base material layer and the barrier layer, between the barrier layer and the sealant layer, on the outer layer side of the base material layer, or at a combination of these positions to constitute an exterior film. In this case, the fire-resistant laminate of each embodiment of the present invention is preferably arranged such that the base material faces the outer side of the battery cell while the fire-resistant resin layer of the fire-resistant laminate faces the inner side of the battery cell. If ignition occurs in the battery cell, the fire can be quickly extinguished.

### (Third embodiment)

The fire-resistant resin composition according to the third embodiment of the present invention is a fire-resistant resin composition comprising an endothermic agent and a resin, wherein the endothermic agent has a thermal decomposition onset temperature of 800°C or lower and an amount of heat absorbed of 300 J/g or larger, and a content of the resin per 100 parts by mass of the endothermic agent is 1 to 20 parts by mass.

The endothermic agent for use in the third embodiment of the present invention has the specific thermal decomposition onset temperature described above and can therefore quickly extinguish fire through its rapid decomposition at the time of ignition. The endothermic agent also has the specific amount of heat absorbed described above and therefore has good heat absorbability and favorable fire resistance and fire-extinguishing performance. Furthermore, the content of the resin within a given range with respect to such a specific endothermic agent can produce a fire-resistant resin composition that can provide a fire-resistant sheet and a fire-resistant resin layer excellent in balance between mechanical strength and fire resistance and fire-extinguishing performance.

The resin for use in the third embodiment is the same as that in the first embodiment. In the third embodiment of the present invention, the resin contained in the fire-resistant resin composition is preferably a thermoplastic resin among those described above, from the viewpoint of improving the dispersing ability of the endothermic agent in the resin, and the mechanical strength of the fire-resistant sheet and the fire-resistant resin layer. Among the thermoplastic resins, at least one selected from the group consisting of polyvinyl acetal resin, polyvinyl alcohol resin, acrylic resin, and ethylene-vinyl acetate copolymer resin is preferred, and polyvinyl acetal resin is more preferred, from the viewpoint of further improving the mechanical strength of the fire-resistant sheet.

Among those described above, a resin having a solubility parameter (SP value) of 9 or more is preferably used as the resin contained in the fire-resistant resin composition. Use of the resin having a SP value of 9 or more easily improves the mechanical strength of the fire-resistant sheet or the fire-resistant resin layer formed from the fire-resistant resin composition. Use of the resin having a SP value of 9 or more and use of a hydrated metal compound as the endothermic agent further enhance the mechanical strength of the fire-resistant sheet or the fire-resistant resin layer. This is probably because the hydrated metal compound has relatively high polarity and therefore has good compatibility with the resin having a SP value of 9 or more, enhancing the dispersing ability of the hydrated metal compound in the resin and consequently improving the mechanical strength of the fire-resistant sheet or the fire-resistant resin layer formed from the fire-resistant resin composition.

Use of the resin having a SP value of 9 or more enhances the dispersing ability of the hydrated metal compound and can thereby attain a relatively large content of the endothermic agent in the fire-resistant resin composition.

In the third embodiment of the present invention, the SP value of the resin contained in the fire-resistant resin composition is more preferably 10 or more and is preferably 15 or less, more preferably 13 or less.

The resin that is suitably used as the resin having a SP value of 9 or more is a thermoplastic resin. Examples thereof can include polyvinyl acetal resin, polyvinyl alcohol resin, acrylic resin, and ethylene-vinyl acetate copolymer resin.

In the present invention, the SP value is a value measured by the Fedors method.

In the third embodiment of the present invention, one of these resins may be used alone, or two or more thereof may be used as a mixture.

Hereinafter, each resin that is suitably used in the third embodiment will be described in more detail.

### (Polyvinyl acetal resin)

The polyvinyl acetal resin is not particularly limited as long as the polyvinyl acetal resin is obtained by the acetalization of polyvinyl alcohol with aldehyde. Polyvinyl butyral resin is suitable. Use of the polyvinyl butyral can enhance mechanical strength even if the amount of the resin with respect to the endothermic agent is relatively small. Hence, given mechanical strength can be ensured even if the fire-resistant sheet or the fire-resistant resin layer has a small thickness.

The hydroxy group content of the polyvinyl acetal resin is preferably 20 to 40% by mol. When the hydroxy group content is 20% by mol or more, the polyvinyl acetal resin has high polarity and strong binding force with the endothermic agent and thus facilitates improving the mechanical strength of the fire-resistant sheet or the fire-resistant resin layer formed from the fire-resistant resin composition. When the hydroxy group content is 40% by mol or less, the fire-resistant sheet or the fire-resistant resin layer is prevented from being too hard. The hydroxy group content is more preferably 23% by mol or more, further preferably 26% by mol or more. Also, the hydroxy group content is more preferably 37% by mol or less, further preferably 35% by mol or less.

The degree of acetalization of the polyvinyl acetal resin is preferably 40 to 80% by mol. When the degree of acetalization falls within the range described above, the hydroxy group content described above falls within the desired range so that the mechanical strength of the fire-resistant sheet or the fire-resistant resin layer is easily improved. The degree of acetalization is more preferably 55% by mol or more, further preferably 65% by mol or more, and is more preferably 76% by mol or less.

The acetyl group content of the polyvinyl acetal resin is preferably 0.1 to 30% by mol. When the acetyl group content falls within this range, the fire-resistant sheet or the fire-resistant resin layer is excellent in moisture resistance, is excellent in compatibility with a plasticizer, and exerts high flexibility for improved handleability. When the acetyl group content falls within this range, the hydroxy group content described above falls within the desired range so that the mechanical strength of the fire-resistant sheet or the fire-resistant resin layer is easily improved. From these viewpoints, the acetyl group content is more preferably 0.2% by mol or more, further preferably 0.5% by mol or more, and is more preferably 15% by mol or less, further preferably 7% by mol or less.

The degree of acetalization, the hydroxy group content, and the acetyl group content can be measured and calculated by methods conforming to, for example, JIS K 6728 "Testing Methods for Polyvinyl Butyral".

The degree of polymerization of the polyvinyl acetal resin is preferably 200 to 3000. When the degree of polymerization falls within this range, the endothermic agent can be properly dispersed in the fire-resistant sheet. The degree of polymerization is more preferably 250 or more, further preferably 300 or more.

A lower degree of polymerization of the polyvinyl acetal resin decreases viscosity so that the endothermic agent is easily dispersed in the fire-resistant sheet or the fire-resistant resin layer. Thus, the mechanical strength of the fire-resistant sheet or the fire-resistant resin layer is improved. From such a viewpoint, the degree of polymerization of the polyvinyl acetal resin is preferably 2000 or less, more preferably 1500 less, further preferably 1000 or less.

The degree of polymerization of the polyvinyl acetal resin refers to a viscosity-average degree of polymerization measured on the basis of a method described in JIS K 6728.

The viscosity of the polyvinyl acetal resin at 10% by mass in ethanol/toluene is preferably 5 mPa·s or higher, more preferably 10 mPa·s or higher, further preferably 15 mPa·s or higher. Also, the viscosity at 10% by mass in ethanol/toluene is preferably 500 mPa·s or lower, more preferably 300 mPa·s or lower, further preferably 200 mPa·s or lower. When the viscosity of the polyvinyl acetal resin at 10% by mass in ethanol/toluene is as described above, the endothermic agent is easily dispersed in the fire-resistant sheet or the fire-resistant resin layer so that the mechanical strength of the fire-resistant sheet is improved.

The viscosity at 10% by mass in ethanol/toluene is a value measured as follows.

150 ml of an ethanol/toluene (weight ratio: 1:1) mixed solvent is placed in an Erlenmeyer flask, to which a weighed sample is then added to adjust the resin concentration to 10 wt%. The flask is shaken for dissolution in a constant temperature room of 20°C. The solution is kept at 20°C, and the viscosity can be measured using a BM-type viscometer to determine the viscosity at 10% by mass in ethanol/toluene.

The aldehyde is not particularly limited. In general, aldehyde having 1 to 10 carbon atoms is suitably used. Examples of the aldehyde having 1 to 10 carbon atoms include, but are not particularly limited to, n-butylaldehyde, isobutylaldehyde, n-valeraldehyde, 2-ethylbutylaldehyde, n-hexylaldehyde, n-octylaldehyde, n-nonylaldehyde, n-decylaldehyde, formaldehyde, acetaldehyde, and benzaldehyde. Among them, n-butylaldehyde, n-hexylaldehyde, or n-valeraldehyde is preferred, and n-butylaldehyde is more preferred. These aldehydes may each be used alone or may be used in combination of two or more thereof.

### (Polyvinyl alcohol resin)

The polyvinyl alcohol resin is obtained according to a heretofore known method by polymerizing vinyl ester to obtain a polymer, followed by the saponification, i.e., hydrolysis, of the polymer.

Examples of the vinyl ester include vinyl acetate, vinyl formate, vinyl propionate, vinyl butyrate, vinyl pivalate, vinyl versatate, vinyl laurate, vinyl stearate and vinyl benzoate.

The degree of saponification of the polyvinyl alcohol resin is preferably 80 to 99.9% by mol, more preferably 85 to 99% by mol. When the degree of saponification falls within such a range, the polyvinyl alcohol resin has high polarity and thereby permits favorable dispersing ability of the endothermic agent and thus facilitates improving the mechanical strength of the fire-resistant sheet or the fire-resistant resin layer formed from the fire-resistant resin composition.

The degree of saponification is measured in conformity to JIS K 6726. The degree of saponification refers to the percentage of a unit actually saponified into a vinyl alcohol unit among units converted to the vinyl alcohol unit by saponification.

The degree of polymerization of the polyvinyl alcohol resin is not particularly limited and is preferably 400 or more, more preferably 500 or more, further preferably 700 or more. Also, the degree of polymerization is preferably 2000 or less, more preferably 1500 or less, further preferably 1000 or less. When the degree of polymerization falls within this range, the endothermic agent can be properly dispersed in the fire-resistant sheet or the fire-resistant resin layer so that the mechanical strength of the fire-resistant sheet or the fire-resistant resin layer is improved. The degree of polymerization is measured in conformity to JIS K 6726.

The viscosity of the polyvinyl alcohol resin at 4% by mass in an aqueous solution is preferably 8 mPa·s or higher, more preferably 10 mPa·s or higher, further preferably 12 mPa·s or higher. Also, the viscosity at 4% by mass in an aqueous solution is preferably 25 mPa·s or lower, more preferably 20 mPa·s or lower, further preferably 16 mPa·s or lower.

When the viscosity of the polyvinyl alcohol resin at 4% by mass in an aqueous solution is as described above, the endothermic agent is easily dispersed in the fire-resistant sheet so that the mechanical strength of the fire-resistant sheet is improved.

The viscosity at 4% by mass in an aqueous solution can be measured at 20°C in conformity to JIS K 6726.

### (Ethylene-vinyl acetate copolymer resin)

The ethylene-vinyl acetate copolymer resin may be non-cross-linked ethylene-vinyl acetate copolymer resin or may be high-temperature cross-linked ethylene-vinyl acetate copolymer resin. Alternatively, a modified ethylene-vinyl acetate resin such as an ethylene-vinyl acetate copolymer saponification product or an ethylene-vinyl acetate hydrolysate may be used as the ethylene-vinyl acetate copolymer resin.

The vinyl acetate content of the ethylene-vinyl acetate copolymer resin measured in conformity to JIS K 6730 "Testing Methods for Ethylene/Vinyl Acetate Resin" is preferably 10 to 50% by mass, more preferably 25 to 45% by mass. When the vinyl acetate content is equal to or more than the lower limit value, adhesiveness to the base material mentioned later is high. When the vinyl acetate content is equal to or less than the upper limit value, the mechanical strength of the fire-resistant sheet or the fire-resistant resin layer is favorable.

The weight-average molecular weight of the ethylene-vinyl acetate copolymer resin is preferably 5000 to 200000, more preferably 10000 to 150000. When the weight-average molecular weight falls within such a range, the endothermic agent can be properly dispersed in the fire-resistant sheet so that the mechanical strength of the fire-resistant sheet is improved. In this context, the weight-average molecular weight is a weight-average molecular weight based on standard polystyrene measured by gel permeation chromatography (GPC).

### (Acrylic resin)

The acrylic resin is obtained, for example, by polymerizing a monomer component containing a (meth)acrylic acid alkyl ester-based monomer. In the present specification, the "(meth)acrylic acid alkyl ester" means "acrylic acid alkyl ester or methacrylic acid alkyl ester". The same holds true for other similar terms.

The (meth)acrylic acid alkyl ester-based monomer according to the present invention is an ester of (meth)acrylic acid and an aliphatic alcohol. The number of carbon atoms in the alkyl group of the aliphatic alcohol is preferably 1 to 14, more preferably 1 to 10.

Specific examples of the (meth)acrylic acid alkyl ester-based monomer include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, hexyl (meth)acrylate, heptyl (meth)acrylate, 2-ethylhexyl (meth)acrylate, n-octyl (meth)acrylate, isooctyl (meth)acrylate, nonyl (meth)acrylate, decyl (meth)acrylate, undecyl (meth)acrylate, dodecyl (meth)acrylate, tridecyl (meth)acrylate, and tetradecyl (meth)acrylate.

These (meth)acrylic acid alkyl ester-based monomers may each be used alone or may be used in combination of two or more thereof.

The monomer component for obtaining the acrylic resin may contain a polar group-containing monomer in addition to the (meth)acrylic acid alkyl ester-based monomer described above.

Examples of the polar group-containing monomer include: carboxylic acids containing a vinyl group, such as (meth)acrylic acid and itaconic acid; vinyl monomers having a hydroxy group, such as 2-hedroxyethyl (meth)acrylate, 2-hedroxypropyl (meth)acrylate, 4-hedroxybutyl (meth)acrylate, caprolactone-modified (meth)acrylate, polyoxyethylene (meth)acrylate, and polyoxypropylene (meth)acrylate; and nitrogen-containing vinyl monomers such as (meth)acrylonitrile, N-vinylpyrrolidone, N-vinylcaprolactam, N-vinyllaurolactam, (meth)acryloylmorpholine, (meth)acrylamide, dimethyl(meth)acrylamide, N-methylol (meth)acrylamide, N-butoxymethyl(meth)acrylamide, and dimethylamino methyl (meth)acrylate.

The acrylic resin is preferably a homopolymer of the (meth)acrylic acid alkyl ester-based monomer, preferably a polymethyl (meth)acrylate, polyethyl (meth)acrylate, or the like which is a homopolymer of methyl (meth)acrylate or ethyl (meth)acrylate, more preferably polymethyl (meth)acrylate, further preferably polymethyl methacrylate.

The weight-average molecular weight of the acrylic resin is preferably 1,000 to 100,000, more preferably 5,000 to 90,000, further preferably 20,000 to 80,000, from the viewpoint that the endothermic agent can be properly dispersed in the fire-resistant sheet so that the mechanical strength of the fire-resistant sheet is improved. In this context, the weight-average molecular weight is a weight-average molecular weight based on standard polystyrene measured by gel permeation chromatography (GPC).

These (meth)acrylic acid alkyl ester-based monomers may each be used alone or may be used in combination of two or more thereof.

The content of the resin contained in the fire-resistant resin composition of the third embodiment is 1 to 20 parts by mass per 100 parts by mass of the endothermic agent. If the content of the resin is less than 1 part by mass per 100 parts by mass of the endothermic agent, the formability of the fire-resistant resin composition, the endothermic agent-retaining performance of the resin, the dispersing ability of the endothermic agent in the resin, etc. are poor. This facilitates reducing the mechanical strength of the fire-resistant sheet. If the content of the resin exceeds 20 parts by mass per 100 parts by mass of the endothermic agent, fire resistance and fire-extinguishing performance are poor. The content of the resin is preferably 3 to 17 parts by mass, more preferably 5 to 15 parts by mass, per 100 parts by mass of the endothermic agent from the viewpoint of improving the mechanical strength of the fire-resistant sheet while attaining favorable fire resistance and fire-extinguishing performance.

The content of the resin in the fire-resistant resin composition of the third embodiment is preferably 0.5 to 50% by mass, more preferably 4 to 20% by mass, further preferably 6 to 15% by mass, based on the total amount of the fire-resistant resin composition. When the content is equal to or more than the lower limit value, the dispersing ability of the endothermic agent is improved so that the mechanical strength of the fire-resistant sheet is easily enhanced. When the content is equal to or less than the upper limit value, the fire resistance and fire-extinguishing performance of the fire-resistant sheet are easily improved.

### (Endothermic agent)

In the third embodiment of the present invention, the fire-resistant resin composition contains an endothermic agent. The endothermic agent has fire resistance and exerts fire-extinguishing performance when ignition occurs. The endothermic agent is dispersed in the resin in the fire-resistant sheet, and retained by the resin.

Specific examples of the endothermic agent for use in the third embodiment include hydrated metal compounds. The hydrated metal compound is a compound having an effect of generating water vapor through its decomposition by the contact of fire, and absorbing heat. Examples of the hydrated metal compound include metal hydroxides and hydrates of metal salts. Specific examples thereof include aluminum hydroxide, magnesium hydroxide, calcium hydroxide, calcium-magnesium hydroxide, hydrotalcite, boehmite, talc, dawsonite, calcium sulfate hydrate, magnesium sulfate hydrate, and zinc borate [2ZnO·3B₂O₅·3.5H₂O].

Among them, at least one selected from the group consisting of aluminum hydroxide, magnesium hydroxide, calcium sulfate dihydrate, and magnesium sulfate heptahydrate is preferred, and aluminum hydroxide is particularly preferred, from the viewpoint of fire resistance, fire-extinguishing performance, etc.

The endothermic agent for use in the third embodiment of the present invention has a thermal decomposition onset temperature of 800°C or lower. If the thermal decomposition onset temperature of the endothermic agent exceeds 800°C, the endothermic agent is difficult to decompose at the time of ignition, and thus cannot quickly extinguish fire.

The endothermic agent for use in the third embodiment of the present invention has an amount of heat absorbed of 300 J/g or larger. If the amount of heat absorbed by the endothermic agent is smaller than 300 J/g, heat absorbability is reduced so that fire resistance and fire-extinguishing performance are poor.

The thermal decomposition onset temperature of the endothermic agent is preferably 500°C or lower, more preferably 400°C or lower, further preferably 300°C or lower, still further preferably 250°C or lower. When the thermal decomposition onset temperature of the endothermic agent is equal to or less than the upper limit value, the endothermic agent is rapidly decomposed at the time of ignition and is thereby capable of quickly extinguishing the fire. Also, the thermal decomposition onset temperature of the endothermic agent is usually 30°C or higher, preferably 100°C or higher, more preferably 150°C or higher, further preferably 180°C or higher. When the thermal decomposition onset temperature of the endothermic agent is equal to or more than the lower limit value, the decomposition of the endothermic agent in the absence of ignition can be suppressed.

The amount of heat absorbed by the endothermic agent is preferably 500 J/g or larger, more preferably 600 J/g or larger, further preferably 900 J/g or larger. When the amount of heat absorbed by the endothermic agent falls within the range described above, heat absorbability is improved. Therefore, fire resistance and fire-extinguishing performance are more favorable. The amount of heat absorbed by the endothermic agent is usually 4000 J/g or smaller, preferably 3000 J/g or smaller, further preferably 2000 J/g or smaller.

Specifically, the endothermic agent preferably has a thermal decomposition onset temperature of 500°C or lower and an amount of heat absorbed of 500 J/g or larger. When either of the thermal decomposition onset temperature or the amount of heat absorbed falls within the range described above, the fire of an ignited battery or the like can be rapidly extinguished.

Examples of the compound having a thermal decomposition onset temperature of 800°C or lower and an amount of heat absorbed of 300 J/g or larger include the hydrated metal compounds described above and more specifically include aluminum hydroxide, magnesium hydroxide, calcium hydroxide, calcium sulfate dihydrate, magnesium sulfate heptahydrate, hydrotalcite, and zinc borate. These compounds are also endothermic agents having a thermal decomposition onset temperature of 500°C or lower and an amount of heat absorbed of 500 J/g or larger.

The endothermic agent according to the third embodiment preferably has an average particle size of 0.1 to 90 µm. When the average particle size falls within the range described above, the endothermic agent is easily dispersed in the resin so that the endothermic agent is easily contained in a large amount.

The average particle size of the endothermic agent is more preferably 0.1 to 40 µm, further preferably 0.2 to 30 µm, still further preferably 0.5 to 10 µm. When the average particle size of the endothermic agent falls within the range described above, the dispersing ability of the endothermic agent is improved so that the mechanical strength of the fire-resistant sheet is enhanced and the endothermic agent can be contained in a large amount for the resin. Furthermore, this also facilitates improving fire resistance and fire-extinguishing performance.

The content of the endothermic agent in the fire-resistant resin composition of the third embodiment is preferably 50 to 99.5% by mass, more preferably 70 to 98% by mass, further preferably 80 to 95% by mass, based on the total amount of the fire-resistant resin composition. When the content of the endothermic agent is equal to or more than the lower limit value, the fire resistance and fire-extinguishing performance of the fire-resistant sheet are improved. When the content is equal to or less than the upper limit value, mechanical strength is enhanced.

The fire-resistant resin composition of the third embodiment of the present invention may contain a flame retardant. The flame retardant contained therein further improves fire resistance and fire-extinguishing performance.

In the third embodiment, the content of the flame retardant is preferably 0.1 to 20 parts by mass, more preferably 0.3 to 10 parts by mass, further preferably 0.5 to 5 parts by mass, per 100 parts by mass of the endothermic agent. When the content of the flame retardant is equal to or more than the lower limit value, the fire resistance and fire-extinguishing performance of the fire-resistant sheet are easily improved. When the content is equal to or less than the upper limit value, the amount of the resin can be equal to or more than a given percentage so that the dispersing ability of the endothermic agent and the flame retardant is enhanced. This facilitates improving mechanical strength.

The fire-resistant resin composition of the third embodiment of the present invention may contain a thermally expandable layered inorganic matter. The thermally expandable layered inorganic matter contained therein further improves fire resistance and fire-extinguishing performance. In the case of using a thermally expandable layered inorganic matter, the content thereof is not particularly limited and can be appropriately adjusted, for example, within the range of 1 to 300 parts by mass per 100 parts by mass of the endothermic agent in consideration of the fire resistance, fire-extinguishing performance, mechanical strength, etc. of the fire-resistant sheet.

The fire-resistant resin composition of the present invention may further contain an inorganic filler other than the endothermic agent, the flame retardant, and the thermally expandable layered inorganic matter described above. The content of the inorganic filler contained therein can be appropriately adjusted, for example, within the range of 1 to 300 parts by mass per 100 parts by mass of the endothermic agent in consideration of the fire resistance, fire-extinguishing performance, mechanical strength, etc. of the fire-resistant sheet.

In the third embodiment, the details, except for contents, of the flame retardant, the thermally expandable layered inorganic matter, and the inorganic filler are the same as those in the first embodiment, so that the description thereabout is omitted.

The fire-resistant resin composition of the third embodiment of the present invention may further contain a plasticizer. Particularly, when the resin component is polyvinyl alcohol resin or polyvinyl acetal resin, the fire-resistant resin composition preferably contains a plasticizer from the viewpoint of improving formability, etc.

The plasticizer is not particularly limited as long as the plasticizer is generally used in combination with polyvinyl alcohol resin or polyvinyl acetal resin. The detailed type and content of the plasticizer are as described in the first embodiment, so that the description thereabout is omitted.

The fire-resistant resin composition of the third embodiment can optionally contain an additive component other than those described above without impairing the objects of the present invention. The type of this additive component is not particularly limited and is as described in the first embodiment.

In the third embodiment of the present invention, the fire-resistant sheet comprises the fire-resistant resin composition. The fire-resistant sheet may be used in itself or may be used as a fire-resistant laminated sheet (fire-resistant laminate) of the fire-resistant sheet (fire-resistant resin layer) laminated with an additional layer. Specifically, the fire-resistant sheet comprising the fire-resistant resin composition preferably constitutes a fire-resistant resin layer, as described above, in the fire-resistant laminate having a base material and the fire-resistant resin layer disposed on at least one side of the base material. More specifically, the fire-resistant sheet comprising the fire-resistant resin composition of the third embodiment can be used as the fire-resistant resin layer of the fire-resistant laminate described in the first and second embodiments. The configuration of the base material is as described in the first and second embodiments.

In the present invention, the fire-resistant sheet comprising the fire-resistant resin composition of the third embodiment can absorb the heat of an ignited battery or the like and quickly extinguish its fire, by using the fire-resistant sheet around the battery or the like. This fire-resistant sheet is also excellent in mechanical strength.

In the third embodiment, the thickness of the fire-resistant sheet (fire-resistant resin layer) is, for example, 2 to 1000 µm, preferably 5 to 500 µm, more preferably 10 to 100 µm, further preferably 20 to 50 µm. When the thickness of the fire-resistant sheet is equal to or more than the lower limit value, the fire-resistant sheet has proper fire resistance and fire-extinguishing performance. When the thickness is equal to or less than the upper limit value, the fire-resistant sheet is prevented from having a thickness larger than necessary, and easily applied to small batteries for use in mobile devices such as mobile phones or smartphones. The thickness of the fire-resistant sheet (fire-resistant resin layer) is the thickness of each fire-resistant sheet when the fire-resistant resin layers are disposed on both sides of the base material.

### (Method for producing fire-resistant sheet)

In the third embodiment, the fire-resistant sheet can be produced by preparing the fire-resistant resin composition and forming the fire-resistant resin composition. The fire-resistant resin composition is obtained by mixing the resin, the endothermic agent, and an optional component such as a flame retardant or a plasticizer to be added if necessary using a known mixing apparatus such as a Banbury mixer, a kneader mixer, a kneading roll, a stone mill, or a planetary centrifugal mixer. Specific examples of the method for forming the fire-resistant resin composition into the fire-resistant sheet include extrusion forming, press forming, and injection forming. Among them, extrusion forming is preferred. The forming can be performed using a single-screw extruder, a twin-screw extruder, an injection forming machine, or the like.

The fire-resistant sheet may be formed by coating a release sheet with a dilution of the fire-resistant resin composition. In the case of using a dilution, the resin is usually a thermoplastic resin, preferably polyvinyl acetal resin.

When the fire-resistant resin composition contains a relatively large amount of the endothermic agent (e.g., the content of the endothermic agent is 50% by mass or more based on the total amount of the fire-resistant resin composition), the fire-resistant sheet is preferably obtained using a dilution from the viewpoint of obtaining a fire-resistant sheet having good dispersing ability of the endothermic agent.

Examples of the solvent for use in diluting the fire-resistant resin composition include, but are not particularly limited to: aliphatic hydrocarbon solvents such as n-pentane, n-hexane, n-heptane, and cyclohexane; aromatic hydrocarbon solvents such as toluene; ester solvents such as ethyl acetate and n-butyl acetate; ketone solvents such as acetone and methyl ethyl ketone (MEK); and alcohol solvents such as ethanol, isopropyl alcohol, and butanol.

The dilution of the fire-resistant resin composition is usually slurry in which the resin is dissolved in the solvent while the fire-resistant additive is dispersed in the solvent. In the case of preparing slurry, for example, an inorganic powder containing a solvent, a dispersant, and an endothermic material is first stirred with a dispersion mixer such as a bead mill to prepare an inorganic dispersion. Then, a solution of the resin dissolved in a solvent in advance is added to the inorganic dispersion, and the mixture can be further stirred with the dispersion mixer to prepare a dilution of the fire-resistant resin composition.

The solid content concentration of the dilution of the fire-resistant resin composition is, for example, 30 to 70% by mass, preferably 35 to 65% by mass, more preferably 40 to 60% by mass. When the solid content concentration is equal to or more than the lower limit value, the fire-resistant sheet can be efficiently formed. When the solid content concentration is equal to or less than the upper limit value, the resin is easily dissolved in the solvent while the endothermic agent is easily dispersed in the solvent.

In the third embodiment, the fire-resistant laminate may be produced, as described above, for example, by extrusion-forming the fire-resistant resin composition and thereby forming the fire-resistant resin layer on one side or both sides of the base material. Alternatively, the fire-resistant laminate may be produced by coating one side or both sides of the base material with a dilution of the fire-resistant resin composition diluted with a solvent, drying the dilution, and thereby forming the fire-resistant resin layer on one side or both sides of the base material.

In the third embodiment, the fire-resistant laminate may be produced by laminating the fire-resistant sheet formed in advance to one side or both sides of the base material by pressure bonding or the like.

In the case of forming fire-resistant sheets on both sides of the base material, the fire-resistant sheets on both sides may be formed at the same time, or may be formed sequentially.

In the present invention, it is preferred to form the fire-resistant sheet using a dilution of the fire-resistant resin composition diluted with a solvent. In the case of using a dilution, the resin is usually a thermoplastic resin, preferably polyvinyl acetal resin.

The type of the solvent for use in diluting, the solid content concentration of the dilution, etc. are as described above.

### (Fourth embodiment)

### [Fire-resistant resin composition]

The fire-resistant resin composition of the fourth embodiment of the present invention contains an endothermic agent having a thermal decomposition onset temperature of 800°C or lower and an amount of heat absorbed of 300 J/g or larger, and a resin. The content of the endothermic agent per 100 parts by mass of the resin is 10 to 1600 parts by mass.

The fire-resistant resin composition of the present invention has the endothermic agent having the specific thermal decomposition onset temperature and amount of heat absorbed, and the resin at the specific ratio. Therefore, even if, for example, a battery cell around which a fire-resistant material comprising this fire-resistant resin composition is arranged is ignited, the fire can be rapidly extinguished.

In the fire-resistant resin composition of the fourth embodiment of the present invention, the average particle size of the endothermic agent is preferably 0.1 to 90 µm, and the melt flow rate of the resin is preferably 1.0 g/10 min or more. In the present invention, when the average particle size of the endothermic agent and the melt flow rate of the resin fall within the given ranges, formability into a sheet or the like is favorable. The favorable formability allows, for example, a fire-resistant sheet, to be wound in a roll.

### <Resin>

Examples of the resin for use in the fourth embodiment include thermoplastic resins and elastomer resins. Examples of the thermoplastic resin include: polyolefin resins such as polypropylene resin, polyethylene resin, poly(1-)butene resin, and polypentene resin; polyester resins such as polyethylene terephthalate; and synthetic resins such as polystyrene resin, acrylonitrile-butadiene-styrene (ABS) resin, ethylene-vinyl acetate copolymers (EVA), polycarbonate resin, polyphenylene ether resin, (meth)acrylic resin, polyamide resin, polyvinyl chloride resin (PVC), novolac resin, polyurethane resin, and polyisobutylene.

Examples of the elastomer resin include acrylonitrile-butadiene rubber, liquid acrylonitrile-butadiene rubber, ethylene-propylene-diene rubber (EPDM), liquid ethylene-propylene-diene rubber (liquid EPDM), ethylene-propylene rubber, liquid ethylene-propylene rubber, natural rubber, liquid natural rubber, polybutadiene rubber, liquid polybutadiene rubber, polyisoprene rubber, liquid polyisoprene rubber, styrene-butadiene block copolymers, liquid styrene-butadiene block copolymers, hydrogenated styrene-butadiene block copolymers, liquid hydrogenated styrene-butadiene block copolymers, hydrogenated styrene-butadiene-styrene block copolymers, liquid hydrogenated styrene-butadienestyrene block copolymers, hydrogenated styrene-isoprene block copolymers, liquid hydrogenated styrene-isoprene block copolymers, hydrogenated styrene-isoprene-styrene block copolymers, and liquid hydrogenated styrene-isoprene-styrene block copolymers.

In the present invention, one of these resins may be used alone, or two or more thereof may be used as a mixture.

Among the resins described above, a thermoplastic resin such as an ethylene-vinyl acetate copolymer (EVA), polycarbonate resin, (meth)acrylic resin, polyamide resin, and polyvinyl chloride resin (PVC) is preferred, and an ethylene-vinyl acetate copolymer (EVA) is more preferred, from the viewpoint of improving formability.

In the fourth embodiment of the present invention, as described above, the melt flow rate of the resin is preferably 1.0 g/10 min or more. When the melt flow rate of the resin is 1.0 g/10 min or more, the endothermic agent has favorable dispersing ability and is uniformly dispersed so that sheet formability is favorably maintained even if the endothermic agent is contained in a large amount. The melt flow rate is more preferably 2.4 g/10 min or more, further preferably 10 g/10 min or more, still further preferably 20 g/10 min or more. When the melt flow rate is equal to or more than the lower limit value, the dispersing ability of the endothermic agent is improved so that the endothermic agent is easily contained in a larger amount.

The melt flow rate of the resin is preferably 40 g/10 min or less, more preferably 35 g/10 min or less.

The melt flow rate is measured under conditions of 190°C and a 2.16 kg load according to JIS K 7210-2: 1999.

The content of the resin in the fire-resistant resin composition according to the fourth embodiment is preferably 5% by mass or more, more preferably 6% by mass or more, further preferably 8% by mass or more. When the content of the resin in the fire-resistant resin composition is equal to or more than the lower limit value, formability in forming the fire-resistant resin composition into a fire-resistant sheet is improved. The content is preferably 85% by mass or less, more preferably 80% by mass or less, further preferably 50% by mass or less, still further preferably 15% by mass or less. In the present invention, when the content is equal to or less than the upper limit value, the endothermic agent can be contained in a large amount. Even if the amount of the resin is as small as 15% by mass or less, etc., the formability is favorable by adjusting the melt flow rate of the resin or the average particle size of the endothermic agent.

### <Endothermic agent>

An endothermic agent having a thermal decomposition onset temperature of 800°C or lower and an amount of heat absorbed of 300 J/g or larger is used as the endothermic agent for use in the fourth embodiment of the present invention. When either of the thermal decomposition onset temperature or the amount of heat absorbed falls outside the range described above, it is difficult to rapidly extinguish the fire of an ignited battery or the like.

The endothermic agent preferably has an average particle size of 0.1 to 90 µm. When the average particle size falls within the range described above, the endothermic agent is easily dispersed in the resin so that the endothermic agent can be uniformly dispersed in the resin and can also be contained in a large amount.

In the description about the fourth embodiment given below, the endothermic agent having a thermal decomposition onset temperature of 800°C or lower and an amount of heat absorbed of 300 J/g or larger is simply referred to as an endothermic agent and also referred to as a first endothermic agent.

The thermal decomposition onset temperature of the endothermic agent is preferably 500°C or lower, more preferably 400°C or lower, further preferably 300°C or lower, still further preferably 250°C or lower. When the thermal decomposition onset temperature of the endothermic agent is equal to or less than the upper limit value, the endothermic agent is rapidly decomposed at the time of ignition and is thereby capable of quickly extinguishing the fire. Also, the thermal decomposition onset temperature of the endothermic agent is, for example, 50°C or higher, preferably 100°C or higher, more preferably 150°C or higher, further preferably 180°C or higher.

The amount of heat absorbed by the endothermic agent is preferably 500 J/g or larger, more preferably 600 J/g or larger, further preferably 900 J/g or larger. When the amount of heat absorbed by the endothermic agent falls within the range described above, heat absorbability is improved. Therefore, fire resistance is more favorable. The amount of heat absorbed by the endothermic agent is usually 4000 J/g or smaller, preferably 3000 J/g or smaller, further preferably 2000 J/g or smaller.

The average particle size of the endothermic agent is more preferably 0.5 to 60 µm, further preferably 0.8 to 40 µm, still further preferably 0.8 to 10 µm. When the average particle size of the endothermic agent falls within the range described above, the dispersing ability of the endothermic agent in the fire-resistant resin composition is improved so that the endothermic agent can be uniformly dispersed in the resin and can be contained in a large amount for the resin.

The endothermic agent is not particularly limited as long as the endothermic agent satisfies the thermal decomposition onset temperature, the amount of heat absorbed, and the average particle size described above. Examples thereof include metal hydroxides, boron compounds, and hydrates of metal salts. Among them, a metal hydroxide is preferred. Use of the metal hydroxide is preferred because water is generated by heat resulting from ignition and can rapidly extinguish fire. Also, a combination of a metal hydroxide and a hydrate of a metal salt is preferred.

Examples of the metal hydroxide include aluminum hydroxide, magnesium hydroxide, calcium hydroxide, and hydrotalcite. Among them, aluminum hydroxide, magnesium hydroxide, and calcium hydroxide are preferred. Examples of the boron compound include zinc borate. The zinc borate is preferably a hydrate, for example, 2ZnO·3B₂O₅·3.5H₂O. Examples of the hydrate of a metal salt include calcium sulfate hydrate (e.g., dihydrate), magnesium sulfate hydrate (e.g., heptahydrate), kaolin clay, dawsonite, and boehmite. Alternatively, the endothermic agent may be calcium aluminate, talc, or the like.

Among them, aluminum hydroxide, magnesium hydroxide, and zinc borate are preferred, and aluminum hydroxide and magnesium hydroxide are more preferred.

The content of the endothermic agent in the fire-resistant resin composition according to the fourth embodiment is 10 to 1600 parts by mass per 100 parts by mass of the resin. Less than 10 parts by mass of the endothermic agent cannot rapidly extinguish the fire of an ignited battery or the like. More than 1600 parts by mass of the endothermic agent are difficult to disperse uniformly in the resin, and deteriorate formability, etc.

The content of the endothermic agent is preferably 100 parts by mass or more, further preferably 500 parts by mass or more, still further preferably 900 parts by mass or more. Also, the content is preferably 1550 parts by mass or less, further preferably 1300 parts by mass or less, still further preferably 1150 parts by mass or less. When the content of the endothermic agent is equal to or more than the lower limit value, rapid temperature elevation can be mitigated while the fire of ignition can be rapidly extinguished. The content that is equal to or less than the upper limit value facilitates uniformly dispersing the endothermic agent in the resin and attains excellent formability, etc.

In a preferred mode, the fire-resistant resin composition according to the fourth embodiment employs, as the endothermic agent, an endothermic agent having a thermal decomposition onset temperature of 500°C or lower and an amount of heat absorbed of 500 J/g or larger. Use of such an endothermic agent is capable of more rapidly extinguishing the fire of an ignited battery cell.

In a preferred mode, the fire-resistant resin composition according to the fourth embodiment contains, as the endothermic agent, two or more endothermic agents differing in thermal decomposition onset temperature from each other. Use of two or more endothermic agents differing in thermal decomposition onset temperature from each other causes chain endothermic reaction in the course of temperature elevation and can effectively extinguish fire. In batteries, for example, an electrolyte solution often burns. However, two or more endothermic agents contained therein can more effectively extinguish fire by using endothermic agents having thermal decomposition onset temperatures corresponding to the flash point and ignition point, respectively, of the electrolyte solution.

From the viewpoint described above, in the case of containing two or more endothermic agents differing in thermal decomposition onset temperature from each other, the endothermic agents preferably differ in thermal decomposition onset temperature by 50°C or more, more preferably 70°C or more, from each other.

For example, two or more different metal hydroxides may be used in combination as the endothermic agents; a metal hydroxide and a hydrate of a metal salt may be used in combination; or any of other combinations may be used.

In one mode, in the case of containing two or more endothermic agents differing in thermal decomposition onset temperature from each other, for example, an endothermic agent having a thermal decomposition onset temperature of 250°C or higher (high temperature-side endothermic agent) and an endothermic agent having a thermal decomposition onset temperature of lower than 250°C (low temperature-side endothermic agent) are preferably used in combination. In this case, the thermal decomposition onset temperature of the high temperature-side endothermic agent is preferably 275°C or higher, and the thermal decomposition onset temperature of the low temperature-side endothermic agent is preferably 225°C or lower. Also, the thermal decomposition onset temperature of the high temperature-side endothermic agent is 800°C or lower, preferably 500°C or lower, more preferably 400°C or lower, and the thermal decomposition onset temperature of the low temperature-side endothermic agent is preferably 110°C or higher, more preferably 150°C or higher. In such an mode, examples of the high temperature-side endothermic agent include magnesium hydroxide, and examples of the low temperature-side endothermic agent include aluminum hydroxide.

In another mode, for example, an endothermic agent having a thermal decomposition onset temperature of 150°C or higher (high temperature-side endothermic agent) and an endothermic agent having a thermal decomposition onset temperature of lower than 150°C (low temperature-side endothermic agent) are preferably used in combination. In this case, the thermal decomposition onset temperature of the high temperature-side endothermic agent is preferably 175°C or higher, and the thermal decomposition onset temperature of the low temperature-side endothermic agent is preferably 130°C or lower. Also, the thermal decomposition onset temperature of the high temperature-side endothermic agent is 800°C or lower, preferably 500°C or lower, more preferably 250°C or lower, and the thermal decomposition onset temperature of the low temperature-side endothermic agent is preferably 50°C or higher. In this mode, examples of the high temperature-side endothermic agent include aluminum hydroxide, and examples of the low temperature-side endothermic agent include calcium sulfate hydrates and magnesium sulfate hydrate.

In the case of using two or more endothermic agents in combination in each mode as described above, the ratio of the content of the low temperature-side endothermic agent to the content of the high temperature-side endothermic agent is not particularly limited and is preferably 1/9 or more and 9/1 or less, more preferably 2/8 or more and 8/2 or less, further preferably 3/7 or more and 7/3 or less.

### <Optional component>

### [Endothermic agent other than those described above]

The fire-resistant resin composition according to the fourth embodiment of the present invention may contain an endothermic agent having a thermal decomposition onset temperature of higher than 800°C (hereinafter, also referred to as a "second endothermic agent"), in addition to the endothermic agent described above (first endothermic agent). In this case, the second endothermic agent is preferably an endothermic agent having a thermal decomposition onset temperature of higher than 800°C and an amount of heat absorbed of 300 J/g or larger. Use of the second endothermic agent having a high thermal decomposition onset temperature and also a high amount of heat absorbed in combination with the first endothermic agent described above suppresses burning through the second endothermic agent after continuation of a given quantity of burning. Therefore, for example, a battery can be prevented from spreading fire.

The thermal decomposition onset temperature of the second endothermic agent is preferably 1200°C or lower, more preferably 1000°C or lower. When the thermal decomposition onset temperature is equal to or less than the upper limit value, the second endothermic agent can effectively suppress burning.

The amount of heat absorbed by the second endothermic agent is preferably 500 J/g or larger, more preferably 600 J/g or larger, further preferably 900 J/g or larger, still further preferably 1500 J/g or larger, from the viewpoint of enhancing the effect of suppressing burning. Also, the amount of heat absorbed by the second endothermic agent is usually 4000 J/g or smaller, preferably 3000 J/g or smaller, further preferably 2000 J/g or smaller.

Examples of the second endothermic agent include carbonic acid metal salts such as calcium carbonate, basic magnesium carbonate, magnesium carbonate, zinc carbonate, strontium carbonate, and barium carbonate.

The content of the second endothermic agent is not particularly limited and is preferably 1/9 or more and 7/3 or less, more preferably 2/8 or more and 6/4 or less, further preferably 2/8 or more and 4/6 or less, in terms of a mass ratio to the content of the first endothermic agent (second endothermic agent/first endothermic agent). When the mass ratio of the content falls within the range described above, the second endothermic agent used easily exerts its effect.

The average particle size of the second endothermic agent is not particularly limited and is preferably 0.1 to 90 µm. When the average particle size falls within the range described above, formability is favorable. The average particle size of the second endothermic agent is more preferably 0.5 to 60 µm, further preferably 0.8 to 40 µm, still further preferably 0.8 to 10 µm. The method for measuring the average particle size of the second endothermic agent is as described above.

### [Flame retardant]

The fire-resistant resin composition of the fourth embodiment of the present invention preferably further contains a flame retardant. When the fire-resistant resin composition of the present invention contains the flame retardant, fire spreading can be suppressed even if a fire-resistant sheet containing this fire-resistant resin composition is ignited. The flame retardant that can be used in the fourth embodiment is the same as the flame retardant listed in the first embodiment described above.

The flame retardant according to the fourth embodiment is preferably red phosphorus, ammonium polyphosphate, or a compound represented by the general formula (1) from the viewpoint of improving the fire retardancy of the fire-resistant sheet, and is more preferably ammonium polyphosphate from the viewpoint of fire retardation performance, safety, and cost, etc.

When the fire-resistant resin composition according to the fourth embodiment of the present invention contains the flame retardant, the content thereof is preferably 1 to 200 parts by mass, more preferably 5 to 100 parts by mass, further preferably 5 to 50 parts by mass, per 100 parts by mass of the resin component. When the content of the flame retardant falls within the range described above, fire spreading can be suppressed when a fire-resistant sheet or the fire-resistant resin layer containing this fire-resistant resin composition is ignited.

The fire-resistant resin composition according to the fourth embodiment of the present invention may contain thermally expandable graphite. When the fire-resistant resin composition contains the thermally expandable graphite, the thermally expandable graphite expands by heating to form large-volume pores, and functions as a flame retardant, and can therefore suppress fire spreading when the fire-resistant sheet containing this fire-resistant resin composition is ignited. The detailed thermally expandable graphite for use in the fourth embodiment is as described above in the first embodiment.

When the fire-resistant resin composition of the fourth embodiment contains the thermally expandable graphite, the content thereof is preferably 10 to 200 parts by mass, more preferably 20 to 150 parts by mass, further preferably 30 to 100 parts by mass, per 100 parts by mass of the resin. When the content of the thermally expandable graphite falls within the range described above, large-volume pores are easily formed in the fire-resistant resin composition. Therefore, fire retardancy is improved.

The fire-resistant resin composition of the fourth embodiment of the present invention may further contain an inorganic filler other than the endothermic agent, the flame retardant and the expandable graphite.

Examples of the inorganic filler other than the endothermic agent and the expandable graphite include, but are not particularly limited to: metal oxides such as alumina, zinc oxide, titanium oxide, calcium oxide, magnesium oxide, iron oxide, tin oxide, antimony oxide, and ferrite; and others such as silica, diatomaceous earth, barium sulfate, clay, mica, montmorillonite, bentonite, activated white earth, meerschaum, imogolite, sericite, glass fiber, glass beads, silica balloons, aluminum nitride, boron nitride, silicon nitride, carbon black, graphite, carbon fiber, carbon balloons, charcoal powders, various metal powders, potassium titanate, magnesium sulfate, lead zirconate titanate, zinc stearate, calcium stearate, aluminum borate, molybdenum sulfide, silicon carbide, stainless fiber, various magnetic powders, slag fiber, fly ash, and dewatered sludge. These inorganic fillers may each be used alone or may be used in combination of two or more thereof.

The average particle size of the inorganic filler is preferably 0.5 to 100 µm, more preferably 1 to 50 µm. When the content of the inorganic filler is small, a small particle size is preferred from the viewpoint of improving dispersing ability. When the content is large, a large particle size is preferred because the formability of the fire-resistant resin composition is reduced due to its viscosity elevated as high filling proceeds.

When the fire-resistant resin composition of the fourth embodiment of the present invention contains the inorganic filler other than the endothermic agent and the expandable graphite, the content thereof is preferably 10 to 300 parts by mass, more preferably 10 to 200 parts by mass, per 100 parts by mass of the resin. When the content of the inorganic filler falls within the range described above, the mechanical physical properties of the fire-resistant sheet containing this fire-resistant resin composition can be improved.

The fire-resistant resin composition according to the fourth embodiment of the present invention may further contain a plasticizer. Particularly, when the resin component is polyvinyl chloride resin, the fire-resistant resin composition preferably contains a plasticizer from the viewpoint of improving formability. The plasticizer is not particularly limited as long as the plasticizer is generally used in producing a formed product of polyvinyl chloride resin. Specific examples of the plasticizer are as listed in the first embodiment. One of these plasticizers may be used alone, or two or more thereof may be used in combination.

When the fire-resistant resin composition of the fourth embodiment of the present invention contains the plasticizer, the content thereof is preferably 5 to 40 parts by mass, more preferably 5 to 35 parts by mass, per 100 parts by mass of the resin. When the content of the plasticizer falls with the range described above, extrusion formability tends to be improved. Furthermore, a formed product can be prevented from being too soft.

The fire-resistant resin composition of the fourth embodiment of the present invention can optionally contain various additive components without impairing the objects of the present invention. The type of this additive component is not particularly limited, and various additives described above can be used. The amount of the additive added can be appropriately selected without impairing formability, etc. These additives may each be used alone or may be used in combination of two or more thereof.

### <Production method>

The fire-resistant resin composition of the fourth embodiment can be obtained by mixing the resin, the endothermic agent, and an optional component using a known apparatus such as a Banbury mixer, a kneader mixer, a kneading roll, a stone mill, or a planetary centrifugal mixer.

The fire-resistant sheet containing the fire-resistant resin composition of the fourth embodiment of the present invention may be used in itself or may be used as a fire-resistant laminated sheet (fire-resistant laminate) of the fire-resistant sheet (fire-resistant resin layer) laminated with an additional layer.

The fire-resistant sheet according to the fourth embodiment comprises the fire-resistant resin composition described above. In the fourth embodiment of the present invention, the fire-resistant sheet can absorb the heat of an ignited battery or the like and quickly extinguish its fire, by using the fire-resistant sheet around the battery or the like.

The thickness of the fire-resistant sheet is not particularly limited and is preferably 5 to 10000 µm, more preferably 20 to 4000 µm, further preferably 50 to 2000 µm, still further preferably 100 to 1800 µm, even further preferably 500 to 1500 µm. When the thickness of the fire-resistant sheet falls within the range described above, the fire-resistant sheet can be used in a small battery cell while maintaining mechanical strength.

In the fourth embodiment of the present invention, the fire-resistant sheet may be used in itself or may be used as a fire-resistant laminated sheet (fire-resistant laminate) of the fire-resistant sheet (fire-resistant resin layer) laminated with an additional layer. Specifically, the fire-resistant sheet comprising the fire-resistant resin composition of the fourth embodiment is preferably used as a fire-resistant resin layer, as described above, in the fire-resistant laminate having a base material and the fire-resistant sheet (fire-resistant resin layer) disposed on at least one side of the base material. More specifically, the fire-resistant sheet comprising the fire-resistant resin composition of the fourth embodiment can be used as the fire-resistant resin layer of the fire-resistant laminates of the first and second embodiments. The configuration of the base material is as described in the first and second embodiments.

In another aspect of the fourth embodiment, the fire-resistant sheet comprises a fire-resistant resin composition containing an endothermic agent and a resin. The amount of heat absorbed by the fire-resistant sheet is 120 J/g or larger. In the present specification, the "amount of heat absorbed by the fire-resistant sheet" means the amount of heat absorbed under heating from 23°C to 1000°C.

If the amount of heat absorbed by the fire-resistant sheet is smaller than 120 J/g, it is difficult to rapidly extinguish the fire of an ignited battery or the like. The amount of heat absorbed by the fire-resistant sheet is preferably 120 J/g or larger, more preferably 400 J/g or larger, further preferably 700 J/g or larger, from the viewpoint of rapidly extinguishing the fire of ignition of a battery.

The amount of heat absorbed by the fire-resistant sheet is preferably 2500 J/g or smaller, more preferably 2000 J/g or smaller, further preferably 1500 J/g or smaller, from the viewpoint of allowing the fire-resistant sheet to contain a given resin so that formability, etc. is favorable.

In another aspect described above, the heat absorption onset temperature of the fire-resistant sheet is 800°C or lower. If the heat absorption onset temperature exceeds 800°C, the fire of ignition cannot be properly extinguished in a short time. The heat absorption onset temperature of the fire-resistant sheet is preferably 500°C or lower, more preferably 400°C or lower, further preferably 300°C or lower, still further preferably 250°C or lower. When the heat absorption onset temperature of the fire-resistant sheet is equal to or less than the upper limit value, the fire-resistant sheet is capable of absorbing heat through its rapid decomposition at the time of ignition, and quickly extinguishing the fire.

The heat absorption onset temperature of the fire-resistant sheet is, for example, 50°C or higher, preferably 100°C or higher, more preferably 150°C or higher, further preferably 180°C or higher.

In an alternative aspect of the present invention, the amount of heat absorbed by the fire-resistant sheet or the heat absorption onset temperature of the fire-resistant sheet can be adjusted within the range described above by allowing the fire-resistant sheet to contain a resin and an endothermic agent, and appropriately adjusting the amount, type, etc. of the endothermic agent as described above. The fire-resistant sheet according to an alternative aspect of the present invention preferably comprises the fire-resistant resin composition of the fourth embodiment described above. Other configurations of the fire-resistant sheet are also as described above.

The method for measuring the amount of heat absorbed by the fire-resistant sheet is as follows.

A thermogravimeter-differential thermal analyzer (TG-DTA) is used in measurement. The measurement conditions involve a temperature increase rate of 4°C/min from room temperature (23°C) to 1000°C, and a fire-resistant sheet weight of 10 mg. The amount of heat absorbed (area of a depression) is calculated from the obtained DTA curve.

The method for measuring the heat absorption onset temperature of the fire-resistant sheet is as follows.

A thermogravimeter-differential thermal analyzer (TG-DTA) is used in measurement. The measurement conditions involve a temperature increase rate of 4°C/min from room temperature (23°C) to 1000°C, and a fire-resistant sheet weight of 10 mg. A temperature at which the amount of heat absorbed by the fire-resistant sheet reached 20% was calculated from the obtained DTA curve. The value was used as the heat absorption onset temperature of the endothermic sheet.

### <Method for producing fire-resistant sheet>

The fire-resistant sheet of the fourth embodiment of the present invention can be produced by forming the fire-resistant resin composition described above. Specific examples of such methods include extrusion forming, press forming, and injection forming. Among them, extrusion forming is preferred. The forming can be performed using a single-screw extruder, a twin-screw extruder, an injection forming machine, or the like.

### (Fifth embodiment)

### [Fire-resistant resin composition]

The fire-resistant resin composition according to the fifth embodiment of the present invention is a fire-resistant resin composition containing a flame retardant having a liquefaction onset temperature of 50 to 700°C, and a resin. In the description below, the flame retardant having a liquefaction onset temperature of 50 to 700°C is referred to as a flame retardant (A).

The fire-resistant resin composition of the present invention contains the flame retardant (A) having the specific liquefaction onset temperature, and the resin. Therefore, even if, for example, a battery cell around which a fire-resistant material comprising this fire-resistant resin composition is arranged is ignited, the fire can be rapidly extinguished.

### <Resin>

Examples of the resin include thermoplastic resins and elastomer resins. The resin for use in the fifth embodiment can be appropriately selected from the resins listed in the fourth embodiment, and used. In the present invention, one of these resins may be used alone, or two or more thereof may be used as a mixture.

In the fifth embodiment, among the resins described above, a thermoplastic resin such as an ethylene-vinyl acetate copolymer (EVA), polycarbonate resin, (meth)acrylic resin, polyamide resin, and polyvinyl chloride resin (PVC) is preferred, and an ethylene-vinyl acetate copolymer (EVA) is more preferred, from the viewpoint of improving formability.

In the fifth embodiment of the present invention, the melt flow rate of the resin is preferably 1.0 g/10 min or more. When the melt flow rate of the resin is 1.0 g/10 min or more, the flame retardant (A) has favorable dispersing ability and is uniformly dispersed so that sheet formability is favorable, for example, even if the flame retardant (A) is contained in a large amount. The melt flow rate is preferably 2.0 g/10 min or more, more preferably 2.3 g/10 min or more, further preferably 2.4 g/10 min or more. When the melt flow rate is equal to or more than the lower limit value, the dispersing ability of the flame retardant (A) is improved so that the flame retardant is easily contained in a larger amount.

The content of the resin in the fire-resistant resin composition according to the fifth embodiment is preferably 5% by mass or more, more preferably 6% by mass or more, further preferably 8% by mass or more. When the content of the resin in the fire-resistant resin composition is equal to or more than the lower limit value, formability in forming the fire-resistant resin composition into a fire-resistant sheet is improved. The content is preferably 85% by mass or less, more preferably 80% by mass or less, further preferably 15% by mass or less. In the present invention, when the content is equal to or less than the upper limit value, the flame retardant (A) can be contained in a large amount. Even if the amount of the resin is as small as 15% by mass or less, etc., the formability is favorable by adjusting the melt flow rate of the resin or the average particle size of the flame retardant (A).

### <Flame retardant (A)>

The fire-resistant resin composition according to the fifth embodiment of the present invention contains the flame retardant (A) having a liquefaction onset temperature of 50 to 700°C. When the liquefaction onset temperature falls within the range described above, the flame retardant is easily liquefied upon ignition and is therefore capable of rapidly extinguishing fire.

The liquefaction onset temperature of the flame retardant (A) is preferably 55°C or higher, more preferably 150°C or higher, further preferably 300°C or higher. The liquefaction onset temperature that is equal to or more than the lower limit value is preferred because the flame retardant is liquefied only by heat at the time of ignition without being liquefied by heat generated at the time of ordinary use of a battery. The liquefaction onset temperature is preferably 650°C or lower, more preferably 600°C or lower, further preferably 550°C or lower. When the liquefaction onset temperature is equal to or less than the upper limit value, the flame retardant (A) is instalently liquefied or vitrified by heat upon ignition so as to cover an ignited part, and is therefore capable of rapidly extinguishing fire.

The liquefaction onset temperature can be measured with a differential scanning calorimeter (DSC). Specifically, the liquefaction onset temperature can be measured by the following method.

A sample having a weight of 10 mg was measured at a temperature increase rate of 4°C/min using a differential scanning calorimeter (DSC) to measure the liquefaction onset temperature. The liquefaction onset temperature is an incipient melting temperature measured by a differential scanning calorimeter (DSC) measurement method stipulated by JIS-K-7121. The incipient melting temperature is a temperature at the point of intersection between a straight line extending a baseline on the low temperature side to the high temperature side, and a tangent line drawn at a point where the gradient is maximal in a curve on the low temperature side of a melting peak.

The flame retardant (A) is not particularly limited as long as the flame retardant satisfies the liquefaction onset temperature. For example, the phosphorus atom-containing compound listed as the flame retardant in the first embodiment can be used, and a boron compound and a metal hydroxide can also be used.

Examples of the boron compound include zinc borate. Examples of the metal hydroxide include aluminum hydroxide, magnesium hydroxide, calcium hydroxide, and hydrotalcite. In the case of using a metal hydroxide, water is generated by heat resulting from ignition and can rapidly extinguish fire.

Among the flame retardants (A) described above, red phosphorus, phosphoric acid ester such as triphenyl phosphate, aluminum phosphite, ammonium polyphosphate, and zinc borate are preferred from the viewpoint of achieving rapid fire extinguishing at the time of ignition, and from the viewpoint of safety, cost, etc. Among them, ammonium polyphosphate, (triphenyl phosphate), and zinc borate are more preferred. Ammonium polyphosphate has a liquefication onset temperature of 510°C. Examples of a commercially available product thereof include "AP422" manufactured by Clariant AG. Triphenyl phosphate has a liquefication onset temperature of 60°C. Examples of a commercially available product thereof include "Triphenyl Phosphate EP" manufactured by Tokyo Chemical Industry Co., Ltd. Zinc borate has a liquefication onset temperature of 370°C. Examples of a commercially available product thereof include "Firebreak ZB" manufactured by Borax, Inc.

The average particle size of the flame retardant (A) is preferably 1 to 200 µm, more preferably 1 to 60 µm, further preferably 3 to 40 µm, still further preferably 5 to 20 µm, as mentioned in the first embodiment.

The content of the flame retardant (A) in the fire-resistant resin composition according to the fifth embodiment of the present invention is preferably 15 to 2500 parts by mass, more preferably 50 to 2000 parts by mass, further preferably 200 to 1600 parts by mass, still further preferably 600 to 1200 parts by mass, per 100 parts by mass of the resin. When the content of the flame retardant (A) is equal to or more than the lower limit value, fire can be extinguished in a shorter time even if a sheet containing this fire-resistant resin composition is ignited. The content of the flame retardant (A) that is equal to or less than the upper limit value facilitates uniformly dispersing the flame retardant in the resin and attains excellent formability, etc.

The fire-resistant resin composition according to the fifth embodiment of the present invention may contain thermally expandable graphite. When the fire-resistant resin composition contains the thermally expandable graphite, the thermally expandable graphite expands by heating to form large-volume pores, and functions as a flame retardant, and can therefore suppress fire spreading when the fire-resistant sheet containing this fire-resistant resin composition is ignited. The detailed thermally expandable graphite for use in the fifth embodiment is as described above in the first embodiment.

When the fire-resistant resin composition of the fifth embodiment contains the thermally expandable graphite, the content thereof is preferably 10 to 200 parts by mass, more preferably 20 to 150 parts by mass, further preferably 30 to 100 parts by mass, per 100 parts by mass of the resin. When the content of the thermally expandable graphite falls within the range described above, large-volume pores are easily formed in the fire-resistant resin composition. Therefore, fire retardancy is improved.

The fire-resistant resin composition of the present invention may further contain an inorganic filler other than the flame retardant (A) and the expandable graphite.

Examples of the inorganic filler other than the flame retardant (A) and the expandable graphite include, but are not particularly limited to: metal oxides such as alumina, zinc oxide, titanium oxide, calcium oxide, magnesium oxide, iron oxide, tin oxide, antimony oxide, and ferrite; metal carbonates such as basic magnesium carbonate, calcium carbonate, magnesium carbonate, zinc carbonate, strontium carbonate, and barium carbonate; and others such as silica, diatomaceous earth, dawsonite, barium sulfate, talc, clay, mica, montmorillonite, bentonite, activated white earth, meerschaum, imogolite, sericite, glass fiber, glass beads, silica balloons, aluminum nitride, boron nitride, silicon nitride, carbon black, graphite, carbon fiber, carbon balloons, charcoal powders, various metal powders, potassium titanate, magnesium sulfate, lead zirconate titanate, zinc stearate, calcium stearate, aluminum borate, molybdenum sulfide, silicon carbide, stainless fiber, various magnetic powders, slag fiber, fly ash, and dewatered sludge. These inorganic fillers may each be used alone or may be used in combination of two or more thereof.

The average particle size of the inorganic filler is preferably 0.5 to 100 µm, more preferably 1 to 50 µm. When the content of the inorganic filler is small, a small particle size is preferred from the viewpoint of improving dispersing ability. When the content is large, a large particle size is preferred because the formability of the fire-resistant resin composition is reduced due to its viscosity elevated as high filling proceeds.

When the fire-resistant resin composition according to the fifth embodiment of the present invention contains the inorganic filler other than the flame retardant and the expandable graphite, the content thereof is preferably 10 to 300 parts by mass, more preferably 10 to 200 parts by mass, per 100 parts by mass of the resin. When the content of the inorganic filler falls within the range described above, the mechanical physical properties of the fire-resistant sheet containing this fire-resistant resin composition can be improved.

The fire-resistant resin composition according to the fifth embodiment of the present invention may further contain a plasticizer. Particularly, when the resin component is polyvinyl chloride resin, the fire-resistant resin composition preferably contains a plasticizer from the viewpoint of improving formability. The plasticizer is not particularly limited as long as the plasticizer is generally used in producing a formed product of polyvinyl chloride resin. Specific examples of the plasticizer are as listed in the first embodiment. One of these plasticizers may be used alone, or two or more thereof may be used in combination.

When the fire-resistant resin composition of the fifth embodiment of the present invention contains the plasticizer, the content thereof is preferably 5 to 40 parts by mass, more preferably 5 to 35 parts by mass, per 100 parts by mass of the resin. When the content of the plasticizer falls with the range described above, extrusion formability tends to be improved. Furthermore, a formed product can be prevented from being too soft.

The fire-resistant resin composition of the fifth embodiment of the present invention can optionally contain various additive components without impairing the objects of the present invention. The type of this additive component is not particularly limited, and various additives described above can be used. The amount of the additive added can be appropriately selected without impairing formability, etc. These additives may each be used alone or may be used in combination of two or more thereof.

### <Production method>

The fire-resistant resin composition according to the fifth embodiment of the present invention can be obtained by mixing the resin, the flame retardant, and an optional component using a known apparatus such as a Banbury mixer, a kneader mixer, a kneading roll, a stone mill, or a planetary centrifugal mixer.

The fire-resistant sheet according to the fifth embodiment of the present invention comprises the fire-resistant resin composition described above. In the present invention, the fire-resistant sheet can absorb the heat of an ignited battery or the like and quickly extinguish its fire, by using the fire-resistant sheet around the battery or the like.

The thickness of the fire-resistant sheet is not particularly limited and is preferably 5 to 10000 µm, more preferably 20 to 4000 µm, further preferably 50 to 2000 µm, still further preferably 100 to 1800 µm, even further preferably 500 to 1500 µm. When the thickness of the fire-resistant sheet falls within the range described above, the fire-resistant sheet can be used in a small battery cell while maintaining mechanical strength.

The fire-resistant sheet of the present invention may be used in itself or may constitute a fire-resistant multilayered sheet (fire-resistant laminate) of the fire-resistant sheet laminated with an additional layer. The fire-resistant multilayered sheet (fire-resistant laminate) has, for example, a base material and a fire-resistant sheet (fire-resistant resin layer) disposed on at least one side of the base material. Specifically, the fire-resistant sheet of the fifth embodiment can be used as the fire-resistant resin layer of the fire-resistant laminates of the first and second embodiments. The configuration of the base material is as described in the first and second embodiments.

The fire-resistant resin compositions of the third to fifth embodiments of the present invention may be used to form a single fire-resistant sheet, as described above, and are preferably used in the fire-resistant resin layer of the fire-resistant laminates of the first and second embodiments. The fire-resistant laminate is arranged, for use, on the surface of a battery. The details thereof are as described above. The fire-resistant laminate of each form may have a pressure-sensitive adhesive material, as described above.

Likewise, the fire-resistant sheet is preferably arranged, for use, on the surface of a battery. In this case, the method for arranging the fire-resistant sheet is the same as that for the fire-resistant laminate described above, so that the description thereabout is omitted.

A pressure-sensitive adhesive material may be provided on at least one side of the fire-resistant sheet. The fire-resistant sheet provided with the pressure-sensitive adhesive material (also referred to as a fire-resistant tape) can be laminated with a battery via the pressure-sensitive adhesive material. The pressure-sensitive adhesive material may be disposed on one fire-resistant sheet, or may be disposed on both fire-resistant sheets, and is preferably disposed on both fire-resistant sheets. When the pressure-sensitive adhesive material is disposed on both fire-resistant sheets, the fire-resistant sheet arranged between two battery cells can laminate both the battery cells with each other. The configuration of the pressure-sensitive adhesive material is as described above, so that the description thereabout is omitted.

The fire-resistant resin compositions of the third to fifth embodiments of the present invention may be used to form an exterior film constituting a battery cell. The configuration of the exterior film is as mentioned above. The fire-resistant resin compositions of the third to fifth embodiments of the present invention can be arranged, for example, on the outer layer side of the exterior film, between the base material layer and the barrier layer, or between the barrier layer and the sealant layer to constitute an exterior film.

In a more preferred mode, the fire-resistant resin layer is preferably disposed at least between the barrier layer and the sealant layer. If ignition occurs in the battery cell, the fire can be quickly extinguished.

### Examples

### (First embodiment)

Hereinafter, the fire-resistant laminate of the first embodiment of the present invention will be described more specifically with reference to Examples. However, the present invention is not limited by these examples.

Methods for measuring and evaluating each physical property are as follows.

### <Method for measuring thermal decomposition onset temperature of endothermic agent>

A thermogravimeter-differential thermal analyzer (TG-DTA) was used in measurement. The measurement conditions involved a temperature increase rate of 4°C/min from room temperature to 1000°C, and an endothermic agent weight of 10 mg. A temperature at which the weight started to decrease in the obtained TG curve was used as the thermal decomposition onset temperature of the endothermic agent.

### <Method for measuring amount of heat absorbed by endothermic agent>

A thermogravimeter-differential thermal analyzer (TG-DTA) was used in measurement. The measurement conditions involved a temperature increase rate of 4°C/min from room temperature to 1000°C, and an endothermic agent weight of 10 mg. The amount of heat absorbed (area of a depression) was calculated from the obtained DTA curve.

### <Method for measuring average particle size>

The average particle size of each component was measured by the laser diffraction method. Specifically, a particle size at an integrated value of 50% in a particle size distribution determined with a particle size distribution analyzer such as a laser diffraction/scattering particle size distribution analyzer was used as the average particle size.

### <Tensile strength of base material>

The tensile strength was measured at a pulling rate of 20 mm/min using AUTOGRAPH (manufactured by Shimadzu Corp., AGS-J) in conformity to JIS 7113.

### <Melting point or softening point of base material>

The melting point or softening point was measured by the method described in the specification.

### <Battery ignition test>

The fire-resistant laminate prepared in each of Examples and Comparative Examples was arranged such that the fire-resistant laminate was wound around a laminated lithium ion cell for use in smartphones. The test specimen was placed on a hot plate set to 300°C, and evaluated for the time from the release of fire to the extinguishing of the fire. The test specimen was rated as "A" when the fire extinguishing time was 5 seconds or shorter, as "B" when the fire extinguishing time was longer than 5 seconds and 10 seconds or shorter, as "C" when the fire extinguishing time was longer than 10 seconds and 30 seconds or shorter, and as "D" when the fire extinguishing time was longer than 30 seconds. A shorter fire extinguishing time means better fire-extinguishing performance. The results are shown in Table 1.

### <Strip burning test>

The fire-resistant laminate prepared in each of Examples and Comparative Examples was cut out into a 2 cm × 5 cm test specimen. The sample thus cut out was roasted with a gas lighter (trade name "Chakkaman", manufactured by Tokai Company) such that the tip of flame was contacted with the lower end of the sample. An assessment was made according to the following evaluation criteria.
A: There was no change for 1 minute or longer.
B: The sample was deformed by burning within 30 seconds.
C: The sample was deformed by burning within 15 seconds.
D: The sample was deformed by burning within 5 seconds.

### <High-temperature tensile strength>

The tensile strength at ordinary temperature (23°C) and 200°C of the fire-resistant laminate obtained in each of Examples and Comparative Examples was measured. On the basis of the rate of deterioration (rate of reduction in strength) of the tensile strength at 200°C from that at ordinary temperature, an assessment was made according to the following evaluation criteria.
A: The rate of deterioration was 10% or less.
B: The rate of deterioration was more than 10% and 40% or less.
C: The rate of deterioration was more than 40% and less than 80%.
D: The rate of deterioration was 80% or more, or the shape was unable to be retained.

### <Residual rate of cross-cut test>

A cross-cut adhesion test was conducted in conformity to JIS D 0202-1988. A cellophane tape (trade name "CT24", manufactured by NICHIBAN Co., Ltd.) was used. The tape was stuck with the ball of a finger to the fire-resistant resin layer obtained in each of Examples and Comparative Examples, and then peeled off. An assessment was indicated by the percent of squares remaining on the base material among 100 squares, and made as described below.
A: 80% or more
B: 40% or more and less than 80%
C: 10% or more and less than 40%
D: Less than 10%

Each component used in Examples and Comparative Examples in the first embodiment was as follows.

### <Resin>

PVB1: Polyvinyl butyral resin, degree of polymerization: 800, degree of acetalization: 69 mol%, acetyl group content: 1 mol%, hydroxy group content: 30 mol%
PVB2: Polyvinyl butyral resin, degree of polymerization: 1700, degree of acetalization: 75 mol%, acetyl group content: 3 mol%, hydroxy group content: 22 mol%
PVC: Polyvinyl chloride resin, trade name "TK Series", manufactured by Shin-Etsu Chemical Co., Ltd.
EVA: Ethylene-vinyl acetate copolymer resin, trade name "Evaflex", manufactured by Dow-Mitsui Polychemicals Co., Ltd., vinyl acetate content: 40% by mass

### <Plasticizer>

DIDP: Diisodecyl phthalate

### <Thermally expandable graphite>

ADT501: Trade name "ADT-501", manufactured by ADT Co., Ltd., average aspect ratio: 25.2

### <Endothermic agent>

Aluminum hydroxide 1: BF013, manufactured by Nippon Light Metal Co., Ltd., average particle size: 1 µm, thermal decomposition onset temperature: 201°C, amount of heat absorbed: 1000 J/g
Aluminum hydroxide 2: SB303, manufactured by Nippon Light Metal Co., Ltd., average particle size: 27 µm, thermal decomposition onset temperature: 201°C, amount of heat absorbed: 1000 J/g
Calcium sulfate: calcium sulfate dihydrate, manufactured by Nacalai Tesque, Inc., average particle size: 42 µm, thermal decomposition onset temperature: 120°C, amount of heat absorbed: 750 J/g

### <Flame retardant>

Ammonium polyphosphate: AP422, Clariant AG, average particle size: 15 µm
Aluminum phosphite; APA100, manufactured by Taihei Chemical Industrial Co., Ltd., average particle size: 42 µm
Triphenyl phosphate: Triphenyl Phosphate EP, manufactured by Tokyo Chemical Industry Co., Ltd., average particle size: 100 µm

### <Dispersant>

Manufactured by Kusumoto Chemicals, Ltd.: ED400

### [Examples 1A to 6A, 11A, 13A, 14A, and 16A to 18A]

The endothermic agent, the flame retardant, and the dispersant were added according to the formulation shown in Table 1-1 to ethanol, and the mixture was stirred for 30 minutes with a bead mill ("Ready Mill" manufactured by AIMEX Co., Ltd.) to prepare an inorganic dispersion. Next, to this inorganic dispersion, a resin solution containing the resin and the plasticizer dissolved in ethanol in advance was added, and the mixture was further stirred for 60 minutes with the bead mill to prepare a slurry liquid having a solid content concentration of 52% by mass. A SUS foil having a thickness of 15 µm was coated with the slurry liquid and dried at 80°C for 30 minutes so that a fire-resistant resin layer having a thickness of 40 µm was formed to obtain a fire-resistant laminate with the fire-resistant resin layer disposed on one side of the base material.

### [Examples 7A and 8A]

Examples 7A and 8A were carried out in the same way as in Example 1A except that the solid content concentration was changed to 40% by mass and 65% by mass, respectively, for sheet preparation.

### [Examples 9A, 10A, 12A, 15A, 19A, and 20A]

Each fire-resistant resin composition having the formulation shown in Table 1-1 was supplied to a single-screw extruder, extrusion-formed at 150°C, and laminated onto a base material so that a fire-resistant resin layer having a thickness of 40 µm was formed to obtain a fire-resistant laminate with the fire-resistant resin layer disposed on one side of the base material.

### [Examples 21A, 22A, and 24A to 29A]

These Examples were carried out in the same way as in Example 1A except that the base material was changed to the type shown in Table 1-2. The glass cloth used was "NCR Glass" manufactured by Nitto Boseki Co., Ltd. The polyimide used was a polyimide resin film (trade name "Kapton") manufactured by Du Pont-Toray Co., Ltd. The punched SUS foil and the punched copper foil were a SUS foil or a copper foil of 20 µm in thickness provided with holes of 1 mm in diameter in a grid-like pattern at 3-mm intervals. The SUS mesh used is manufactured by Sakakura Wire & Wire Netting Co., Ltd. and was of plain-woven type having a thickness of 70 µm and an opening size of 250 mesh.

### [Example 23A]

This Example was carried out in the same way as in Example 12A except that the base material was changed to the type shown in Table 1-2.

### [Examples 30A and 31A]

These Examples were carried out in the same way as in Example 1A except that: the base material of the type shown in Table 1-2 was used; and fire-resistant resin layers were disposed on both sides of the base material. The fire-resistant resin layers were prepared by forming one of the fire-resistant resin layers on one side of the base material in the same way as in Example 1A, and then forming the other fire-resistant resin layer on the other side of the base material by the same method as above.

### [Comparative Example 1A]

A release film (PET film manufactured by Lintec Corp.) was coated instead of the SUS foil with the slurry liquid and dried so that a fire-resistant resin layer having a thickness of 40 µm was formed. The release film was peeled off from the fire-resistant resin layer to obtain a fire-resistant sheet consisting of the single fire-resistant resin layer having a thickness of 40 µm.

### [Comparative Example 2A]

The fire-resistant resin composition having the formulation shown in Table 1-2 was supplied to a single-screw extruder and extrusion-formed at 150°C to obtain a fire-resistant sheet consisting of the single fire-resistant resin layer having a thickness of 40 µm.

### [Comparative Examples 3A to 5A]

These Comparative Examples were carried out in the same way as in Example 1A except that the base material was changed to the type shown in Table 1-2. The PET(polyethylene terephthalate) film used was "ESPET Film" manufactured by Toyobo Co., Ltd. The PP (polypropylene) film used was a biaxially drawn polypropylene film manufactured by Futamura Chemical Co., Ltd. The paper used was a general copy paper.

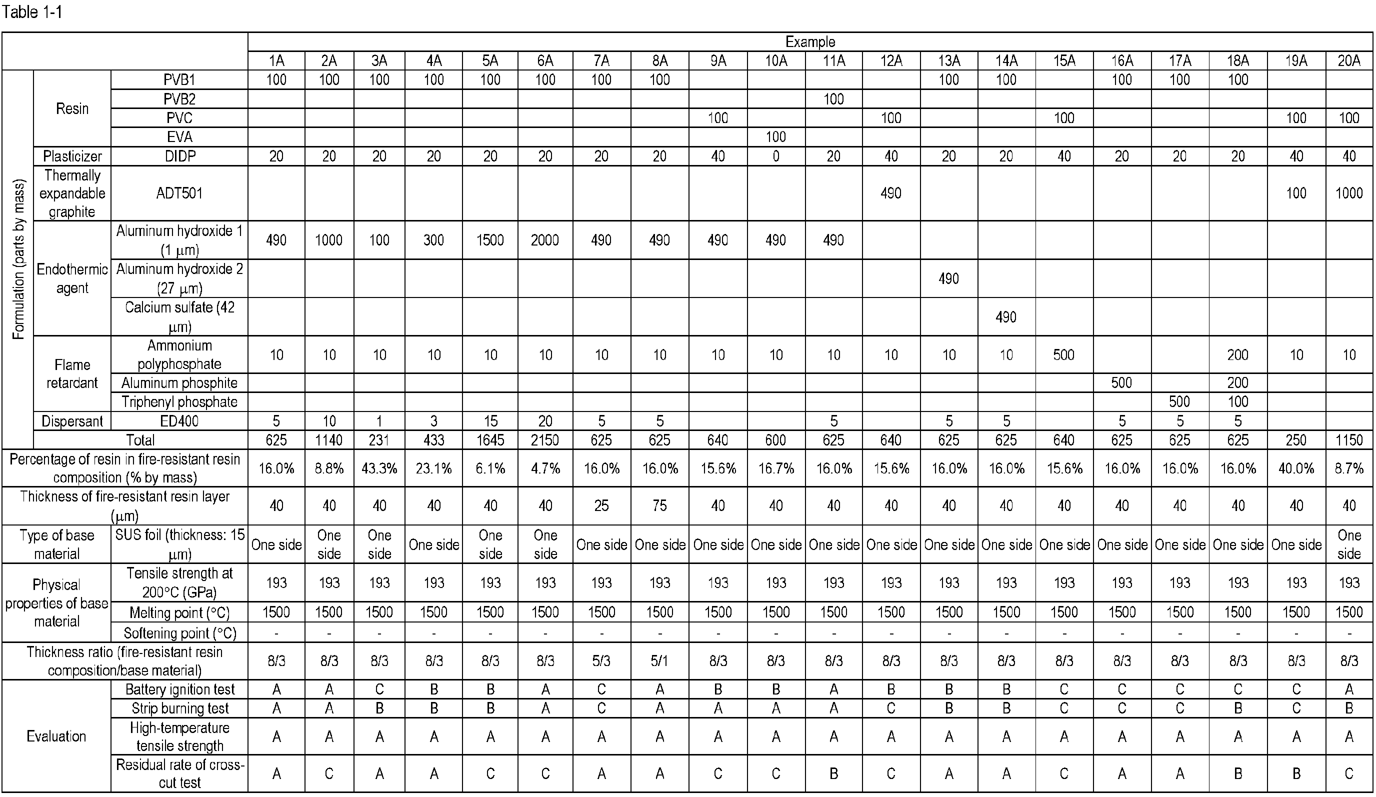

**Table 1-2**

| | | | Example | | | | | | | | | | | Comparative Example | | | | |
|---|---|---|---|---|---|---|---|---|---|---|---|---|---|---|---|---|---|---|
| | | | 21A | 22A | 23A | 24A | 25A | 26A | 27A | 28A | 29A | 30A | 31A | 1A | 2A | 3A | 4A | 5A |
| Formulation (parts by mass) | Binder | PVB1 | 100 | 100 | | 100 | 100 | 100 | 100 | 100 | 100 | 100 | 100 | 100 | | 100 | 100 | 100 |
| | | PVB2 | | | | | | | | | | | | | | | | |
| | | PVC | | | 100 | | | | | | | | | | 100 | | | |
| | | EVA | | | | | | | | | | | | | | | | |
| | Plasticizer | DIDP | 20 | 20 | 40 | 20 | 20 | 20 | 20 | 20 | 20 | 20 | 20 | 20 | 40 | 20 | 20 | 20 |
| | Thermally expandable graphite | ADT501 | | | 490 | | | | | | | | | | | | | |
| | Endothermic agent | Aluminum hydroxide (1 µm) | 490 | 490 | | | 490 | 490 | 490 | 490 | 490 | 490 | 490 | 490 | 490 | 490 | 490 | 490 |
| | | Aluminum hydroxide (27 µm) | | | | 490 | | | | | | | | | | | | |
| | | Calcium sulfate (42 µm) | | | | | | | | | | | | | | | | |
| | Flame retardant | Ammonium polyphosphate | 10 | 10 | 10 | 10 | 10 | 10 | 10 | 10 | 10 | 10 | 10 | 10 | 10 | 10 | 10 | 10 |
| | Dispersant | ED400 | 5 | 5 | | 5 | 5 | 5 | 5 | 5 | 5 | 5 | 5 | 5 | | 5 | 5 | 5 |
| | Total | | 625 | 625 | 640 | 625 | 625 | 625 | 625 | 625 | 625 | 625 | 625 | 625 | 640 | 625 | 625 | 625 |
| Percentage of resin in fire-resistant resin composition (% by mass) | | | 16% | 16% | 16% | 16.0% | 16.0% | 16.0% | 16.0% | 16.0% | 16.0% | 16.0% | 16.0% | 16.0% | 15.6% | 16.0% | 16.0% | 16.0% |
| Thickness of fire-resistant resin layer (µm) | | | 40 | 40 | 40 | 40 | 40 | 40 | 40 | 40 | 40 | 40 | 40 | 40 | 40 | 40 | 40 | 40 |
| | | SUS foil (thickness: 15 µm) | | | | | | | | | | Both sides | | | | | | |
| | | SUS foil (thickness: 50 µm) | One side | | | | | | | | | | | | | | | |
| | | Aluminum foil (thickness: 10 µm) | | One side | | | | | | | | | | | | | | |
| | | Copper foil (thickness: 20 µm) | | | One side | | | | | | | | | | | | | |
| | | Nickel foil (thickness: 20 µm) | | | | One side | | | | | | | | | | | | |
| | | Glass cloth (thickness: 50 µm) | | | | | One side | | | | | | | | | | | |
| Type of base material | | Polyimide (thickness: 20 µm) | | | | | | One side | | | | | | No base material | | | | |
| | | Punched SUS foil (thickness: 20 µm) | | | | | | | One side | | | | | | | | | |
| | | Punched copper foil (thickness: 20 µm) | | | | | | | | One side | | | | | | | | |
| | | SUS mesh (thickness: 50 µm) | | | | | | | | | One side | | Both sides | | | | | |
| | | PET film (thickness: 20 µm) | | | | | | | | | | | | | | One side | | |
| | | PP film (thickness: 20 µm) | | | | | | | | | | | | | | | One side | |
| | | Paper (thickness: 30 µm) | | | | | | | | | | | | | | | | One side |
| Physical properties of base material | | Tensile strength at 200°C (GPa) | 193 | 70 | 130 | 200 | 10 | 5 | 60 | 50 | 120 | 193 | 120 | - | - | 1 | 0.6 | 0.1 |
| | | Melting point (°C) | 1500 | 660 | 1080 | 1450 | 900 | - | 1500 | 1080 | 1500 | 1500 | 1500 | - | - | - | - | Absent |
| | | Softening point (°C) | - | - | - | - | - | 500 | - | - | - | - | | - | - | 180 | 120 | |
| Thickness ratio (fire-resistant resin composition/base material) | | | 4/5 | 4/1 | 2/1 | 2/1 | 4/5 | 2/1 | 2/1 | 2/1 | 4/5 | 8/3 | 4/5 | - | - | 2/1 | 2/1 | 4/3 |
| Evaluation | | Battery ignition test | A | B | B | A | B | C | A | B | A | A | B | D | D | D | D | D |
| | | Strip burning test | A | C | B | A | B | C | A | B | A | A | A | D | D | D | D | D |
| | | High-temperature tensile strength | A | C | B | A | C | C | A | B | A | A | A | D | D | D | D | D |
| | | Residual rate of cross-cut test | A | A | A | A | A | B | A | A | A | A | A | - | - | C | C | B |

As shown in each Example described above, the fire-resistant laminate with the fire-resistant resin layer disposed on at least one side of the base material had favorable fire resistance and fire extinguishing characteristics by allowing the fire-resistant resin layer to contain the predetermined fire-resistant additive, and setting the softening point or melting point of the base material to 300°C or higher. By contrast, in Comparative Examples 1A to 5A, fire resistance and fire extinguishing characteristics were not favorable because no base material was established, or the base material, if established, did not have a softening point or a melting point equal to or higher than the predetermined value.

### (Second embodiment)

Hereinafter, the fire-resistant laminate of the second embodiment of the present invention will be described more specifically with reference to Examples. However, the present invention is not limited by these examples.

The method for measuring each physical property is the same as that of the first embodiment. Evaluation methods are as follows.

### <Battery nail penetration test>

The fire-resistant laminate prepared in each of Examples and Comparative Examples was arranged such that the fire-resistant laminate was wound around a battery cell consisting of a laminated lithium ion cell for use in smartphones. The battery was subjected to the nail penetration test under conditions involving a penetration rate of 10 mm/s using a nail having a diameter of 5 mm. The area of the battery cell covered with the base material in the nail penetration test is as shown in Tables 2-1 to 2-3. The sample was rated as "A" when the nail penetration caused no fire, as "B" when the time from the confirmation of fire caused by the nail penetration to fire extinguishing was 30 seconds or shorter, as "C" when the time from the confirmation of fire caused by the nail penetration to fire extinguishing was longer than 30 seconds and shorter than 60 seconds, and as "D" when the time from the confirmation of fire caused by the nail penetration to fire extinguishing was 60 seconds or longer. A shorter fire extinguishing time means better fire-extinguishing performance. The results are shown in Tables 2-1 to 2-3.

The strip burning test and the high-temperature tensile strength were conducted in the same way as in Examples of the first embodiment.

Each component used in Examples and Comparative Examples is as shown in Examples of the first embodiment.

### [Examples 1B to 5B, 7B to 10B, 15B, 17B, 18B, and 20B to 22B]

The endothermic agent, the flame retardant, and the dispersant were added according to the formulation shown in Tables 2-1 and 2-2 to ethanol, and the mixture was stirred for 30 minutes with a bead mill ("Ready Mill" manufactured by AIMEX Co., Ltd.) to prepare an inorganic dispersion. Next, to this inorganic dispersion, a resin solution containing the resin and the plasticizer dissolved in ethanol in advance was added, and the mixture was further stirred for 60 minutes with the bead mill to prepare a slurry liquid having a solid content concentration of 52% by mass. A SUS foil having a thickness of 15 µm was coated with the slurry liquid and dried at 80°C for 30 minutes so that a fire-resistant resin layer having a thickness of 40 µm was formed to obtain a fire-resistant laminate with the fire-resistant resin layer disposed on one side of the base material. Next, the fire-resistant laminate was punched to establish holes having the shape, size and arrangement described in Tables 2-1 and 2-2. These holes disposed in the base material were not infilled with the fire-resistant resin layer.

### [Example 6B]

This Example was carried out in the same way as in Example 1B except that a base material provided with holes having the shape, size and arrangement described in Table 2-1 was coated with the slurry liquid to form a fire-resistant resin layer. The holes disposed in the base material were infilled with the fire-resistant resin layer.

### [Examples 11B and 12B]

Examples 11B and 12B were carried out in the same way as in Example 1B except that the solid content concentration was changed to 40% by mass and 65% by mass, respectively, for sheet preparation. These holes disposed in the base material were not infilled with the fire-resistant resin layer.

### [Examples 13B, 14B, 16B, 19B, 23B, and 24B]

Each fire-resistant resin composition having the formulation shown in Tables 2-1 and 2-2 was supplied to a single-screw extruder, extrusion-formed at 150°C, and laminated onto a base material so that a fire-resistant resin layer having a thickness of 40 µm was formed to obtain a fire-resistant laminate with the fire-resistant resin layer disposed on one side of the base material. These holes disposed in the base material were not infilled with the fire-resistant resin layer.

### [Examples 25B and 26B]

These Examples were carried out in the same way as in Example 1B except that: the fire-resistant laminate was not punched (aperture ratio of the base material: 0%); and the coverage of the battery cell with the base material was changed as shown in Table 2.

### [Example 27B]

This Example was carried out in the same way as in Example 1B except that the coverage of the battery cell with the base material was changed as shown in Table 2. The holes disposed in the base material were not infilled with the fire-resistant resin layer.

### [Example 28B]

This Example was carried out in the same way as in Example 1B except that: a base material provided with holes having the shape, size and arrangement described in Table 2-2 was used; and the coverage of the battery cell with the base material was changed as shown in Table 2. The holes disposed in the base material were not infilled with the fire-resistant resin layer.

### [Examples 29B, 30B, and 32B to 37B]

These Examples were carried out in the same way as in Example 1B except that the base material was changed to the type shown in Table 2-3. The glass cloth used was "NCR Glass" manufactured by Nitto Boseki Co., Ltd. The polyimide used was a polyimide film (trade name "Kapton") manufactured by Du Pont-Toray Co., Ltd. These holes disposed in the base material were not infilled with the fire-resistant resin layer.

### [Example 31B]

This Example was carried out in the same way as in Example 13B except that the base material was changed to the type shown in Table 2-3. The holes disposed in the base material were not infilled with the fire-resistant resin layer.

### [Examples 38B and 39B]

These Examples were carried out in the same way as in Example 1B except that: the base material of the type shown in Table 2-3 was used; and fire-resistant resin layers were disposed on both sides of the base material. The fire-resistant resin layers were prepared by forming one of the fire-resistant resin layers on one side of the base material in the same way as in Example 1B, and then forming the other fire-resistant resin layer on the other side of the base material by the same method as above. These holes disposed in the base material were not infilled with the fire-resistant resin layer.

### [Comparative Example 1B]

A release film (PET film manufactured by Lintec Corp.) was coated instead of the SUS foil with the slurry liquid and dried so that a fire-resistant resin layer having a thickness of 40 µm was formed. The release film was peeled off from the fire-resistant resin layer to obtain a single fire-resistant resin layer having a thickness of 40 µm. Next, the single fire-resistant resin layer was punched so that holes were established with the shape, size and arrangement described in Table 2-3 to obtain a fire-resistant sheet.

### [Comparative Example 2B]

The fire-resistant resin composition having the formulation shown in Table 2-3 was supplied to a single-screw extruder and extrusion-formed at 150°C to obtain a single fire-resistant resin layer having a thickness of 40 µm. Next, the single fire-resistant resin layer was punched so that holes were established with the shape, size and arrangement described in Table 2-3 to obtain a fire-resistant sheet.

### [Comparative Examples 3B to 5B]

These Comparative Examples were carried out in the same way as in Example 1B except that the base material was changed to the type shown in Table 2-3. The PET(polyethylene terephthalate) film used was "ESPET Film" manufactured by Toyobo Co., Ltd. The PP (polypropylene) film used was a biaxially drawn polypropylene film manufactured by Futamura Chemical Co., Ltd. The paper used was a general copy paper.

### [Reference Example 1B]

This Reference Example was carried out in the same way as in Example 1B except that the fire-resistant laminate was not punched (aperture ratio of the base material: 0%).

### [Reference Example 2B]

This Reference Example was carried out in the same way as in Example 1B except that: the fire-resistant laminate was not punched (aperture ratio of the base material: 0%); and the coverage of the battery cell with the base material was changed as shown in Table 2-3.

### [Reference Example 3B]

This Reference Example was carried out in the same way as in Example 1B except that: a base material provided with holes having the shape, size and arrangement described in Table 2-3 was used; and the coverage of the battery cell with the base material was changed as shown in Table 2-3. The holes disposed in the base material were not infilled with the fire-resistant resin layer.

**Table 2-1**

| | | | Example | | | | | | | | | | | |
|---|---|---|---|---|---|---|---|---|---|---|---|---|---|---|
| | | | 1B | 2B | 3B | 4B | 5B | 6B | 7B | 8B | 9B | 10B | 11B | 12B |
| Formulation (parts by mass) | Resin | PVB1 | 100 | 100 | 100 | 100 | 100 | 100 | 100 | 100 | 100 | 100 | 100 | 100 |
| | | PVB2 | - | - | - | - | - | - | - | - | - | - | - | - |
| | | PVC | - | - | - | - | - | - | - | - | - | - | - | - |
| | | EVA | - | - | - | - | - | - | - | - | - | - | - | - |
| | Plasticizer | DIDP | 20 | 20 | 20 | 20 | 20 | 20 | 20 | 20 | 20 | 20 | 20 | 20 |
| | Thermally expandable graphite | ADT501 | - | - | - | - | - | - | - | - | - | - | - | - |
| | Endothermic agent | Aluminum hydroxide 1 (1 µm) | 490 | 490 | 490 | 490 | 1000 | 490 | 100 | 300 | 1500 | 2000 | 490 | 490 |
| | | Aluminum hydroxide 2 (27 µm) | - | - | - | - | - | - | - | - | - | - | - | - |
| | | Calcium sulfate (42 µm) | - | - | - | - | - | - | - | - | - | - | - | - |
| | Flame retardant | Ammonium polyphosphate | 10 | 10 | 10 | 10 | 10 | 10 | 10 | 10 | 10 | 10 | 10 | 10 |
| | | Aluminum phosphite | - | - | - | - | - | - | - | - | - | - | - | - |
| | | Triphenyl phosphate | - | - | - | - | - | - | - | - | - | - | - | - |
| | Dispersant | ED400 | 5 | 5 | 5 | 5 | 10 | 5 | 1 | 3 | 15 | 20 | 5 | 5 |
| | Total | | 620 | 620 | 620 | 620 | 1130 | 620 | 230 | 430 | 1630 | 2130 | 620 | 620 |
| Percentage of resin in fire-resistant resin composition (% by mass) | | | 16.1% | 16.1% | 16.1% | 16.1% | 8.8% | 16.1% | 43.5% | 23.3% | 6.1% | 4.7% | 16.1% | 16.1% |
| Thickness of fire-resistant resin layer (µm) | | | 40 | 40 | 40 | 40 | 40 | 40 | 40 | 40 | 40 | 40 | 25 | 75 |
| Type of base material | | SUS foil (thickness: 15 µm) | One side | One side | One side | One side | One side | One side | One side | One side | One side | One side | One side | One side |
| Physical properties of base material | | Tensile strength at 200°C (GPa) | 193 | 193 | 193 | 193 | 193 | 193 | 193 | 193 | 193 | 193 | 193 | 193 |
| | | Melting point (°C) | 1500 | 1500 | 1500 | 1500 | 1500 | 1500 | 1500 | 1500 | 1500 | 1500 | 1500 | 1500 |
| | | Softening point (°C) | - | - | - | - | - | - | - | - | - | - | - | - |
| Hole shape | | | Round | Tetragonal | Round | - | - | Round | Round | Round | Round | Round | Round | Round |
| Hole size (diameter, opening size) | | | 1 mm | 1 cm square | Random | 250 mesh | 30 mesh | 1 mm | 1 mm | 1 mm | 1 mm | 1 mm | 1 mm | 1 mm |
| Hole arrangement (sequence, mesh) | | | 1 mm interval | 1 cm interval | Random | Net-like | Net-like | 1 mm interval | 1 mm interval | 1 mm interval | 1 mm interval | 1 mm interval | 1 mm interval | 1 mm interval |
| Aperture ratio of base material | | | 10% | 25% | 25% | 37% | 50% | 10% | 10% | 10% | 10% | 10% | 10% | 10% |
| Infilling with fire-resistant resin composition | | | Absent | Absent | Absent | Absent | Absent | Present | Absent | Absent | Absent | Absent | Absent | Absent |
| Thickness ratio (fire-resistant resin composition/base material) | | | 8/3 | 8/3 | 8/3 | 8/3 | 8/3 | 8/3 | 8/3 | 8/3 | 8/3 | 8/3 | 5/3 | 5/1 |
| Coverage of battery cell with base material | | | 90% | 75% | 75% | 63% | 50% | 90% | 90% | 90% | 90% | 90% | 90% | 90% |
| Evaluation | | Battery nail penetration test | A | A | A | B | B | A | B | B | B | B | C | A |
| | | Strip burning test | A | A | A | A | A | A | B | B | B | A | C | A |
| | | High-temperature tensile strength | A | A | A | A | A | A | A | A | A | A | A | A |

**Table 2-2**

| | | | Example | | | | | | | | | | | | | | | |
|---|---|---|---|---|---|---|---|---|---|---|---|---|---|---|---|---|---|---|
| | | | 13B | 14B | 15B | 16B | 17B | 18B | 19B | 20B | 21B | 22B | 23B | 24B | 25B | 26B | 27B | 28B |
| Formulation (parts by mass) | Resin | PVB1 | - | - | - | - | 100 | 100 | - | 100 | 100 | 100 | - | - | 100 | 100 | 100 | 100 |
| | | PVB2 | - | - | 100 | - | - | - | - | - | - | - | - | - | - | - | - | - |
| | | PVC | 100 | - | - | 100 | - | - | 100 | - | - | - | 100 | 100 | - | - | - | - |
| | | EVA | - | 100 | - | - | - | - | - | - | - | - | - | - | - | - | - | - |
| | Plasticizer | DIDP | 40 | 0 | 20 | 40 | 20 | 20 | 40 | 20 | 20 | 20 | 40 | 40 | 20 | 20 | 20 | 20 |
| | Thermally expandable graphite | ADT501 | - | - | - | 490 | - | - | - | - | - | - | 100 | 1000 | - | - | - | - |
| | Endothermic agent | Aluminum hydroxide 1 (1 µm) | 490 | 490 | 490 | - | - | - | - | - | - | - | - | - | 490 | 490 | 490 | 490 |
| | | Aluminum hydroxide 2 (27 µm) | - | - | - | - | 490 | - | - | - | - | - | - | - | - | - | - | - |
| | | Calcium sulfate (42 µm) | - | - | - | - | - | 490 | - | - | - | - | - | - | - | - | - | - |
| | Flame retardant | Ammonium polyphosphate | 10 | 10 | 10 | 10 | 10 | 10 | 500 | - | - | 200 | 10 | 10 | 10 | 10 | 10 | 10 |
| | | Aluminum phosphite | - | - | - | - | - | - | - | 500 | - | 200 | - | - | - | - | - | - |
| | | Triphenyl phosphate | - | - | - | - | - | - | - | - | 500 | 100 | - | - | - | - | - | - |
| | Dispersant | ED400 | - | - | 5 | - | 5 | 5 | - | 5 | 5 | 5 | - | - | 5 | 5 | 5 | 5 |
| | Total | | 640 | 600 | 620 | 640 | 620 | 620 | 640 | 620 | 620 | 620 | 250 | 1150 | 620 | 620 | 620 | 620 |
| Percentage of resin in fire-resistant resin composition (% by mass) | | | 15.6% | 16.7% | 16.1% | 15.6% | 16.1% | 16.1% | 15.6% | 16.1% | 16.1% | 16.1% | 40.0% | 8.7% | 16.1% | 16.1% | 16.1% | 16.1% |
| Thickness of fire-resistant resin layer (µm) | | | 40 | 40 | 40 | 40 | 40 | 40 | 40 | 40 | 40 | 40 | 40 | 40 | 40 | 40 | 40 | 40 |
| Type of base material | | SUS foil (thickness: 15 µm) | One side | One side | One side | One side | One side | One side | One side | One side | One side | One side | One side | One side | One side | One side | One side | One side |
| Physical properties of base material | | Tensile strength at 200°C (GPa) | 193 | 193 | 193 | 193 | 193 | 193 | 193 | 193 | 193 | 193 | 193 | 193 | 193 | 193 | 193 | 193 |
| | | Melting point (°C) | 1500 | 1500 | 1500 | 1500 | 1500 | 1500 | 1500 | 1500 | 1500 | 1500 | 1500 | 1500 | 1500 | 1500 | 1500 | 1500 |
| | | Softening point (°C) | - | - | - | - | - | - | - | - | - | - | - | - | - | - | - | - |
| Hole shape | | | Round | Round | Round | Round | Round | Round | Round | Round | Round | Round | Round | Round | - | - | Round | Round |
| Hole size (diameter, opening size) | | | 1 mm | 1 mm | 1 mm | 1 mm | 1 mm | 1 mm | 1 mm | 1 mm | 1 mm | 1 mm | 1 mm | 1 mm | - | - | 1 mm | Random |
| Hole arrangement (sequence, mesh) | | | 1 mm interval | 1 mm interval | 1 mm interval | 1 mm interval | 1 mm interval | 1 mm interval | 1 mm interval | 1 mm interval | 1 mm interval | 1 mm interval | 1 mm interval | 1 mm interval | - | - | 1 mm interval | Random |
| Aperture ratio of base material | | | 10% | 10% | 10% | 10% | 10% | 10% | 10% | 10% | 10% | 10% | 10% | 10% | 0% | 0% | 10% | 30% |
| Infilling with fire-resistant resin composition | | | Absent | Absent | Absent | Absent | Absent | Absent | Absent | Absent | Absent | Absent | Absent | Absent | Absent | Absent | Absent | Absent |
| Thickness ratio (fire-resistant resin composition/base material) | | | 8/3 | 8/3 | 8/3 | 8/3 | 8/3 | 8/3 | 8/3 | 8/3 | 8/3 | 8/3 | 8/3 | 8/3 | 8/3 | 8/3 | 8/3 | 8/3 |
| Coverage of battery cell with base material | | | 90% | 90% | 90% | 90% | 90% | 90% | 90% | 90% | 90% | 90% | 90% | 90% | 83% | 93% | 75% | 45% |
| Evaluation | | Battery nail penetration test | B | B | A | B | B | B | B | B | B | B | B | A | A | A | A | A |
| | | Strip burning test | A | A | A | C | B | B | C | C | C | B | C | B | A | A | A | A |
| | | High-temperature tensile strength | A | A | A | A | A | A | A | A | A | A | A | A | A | A | A | A |

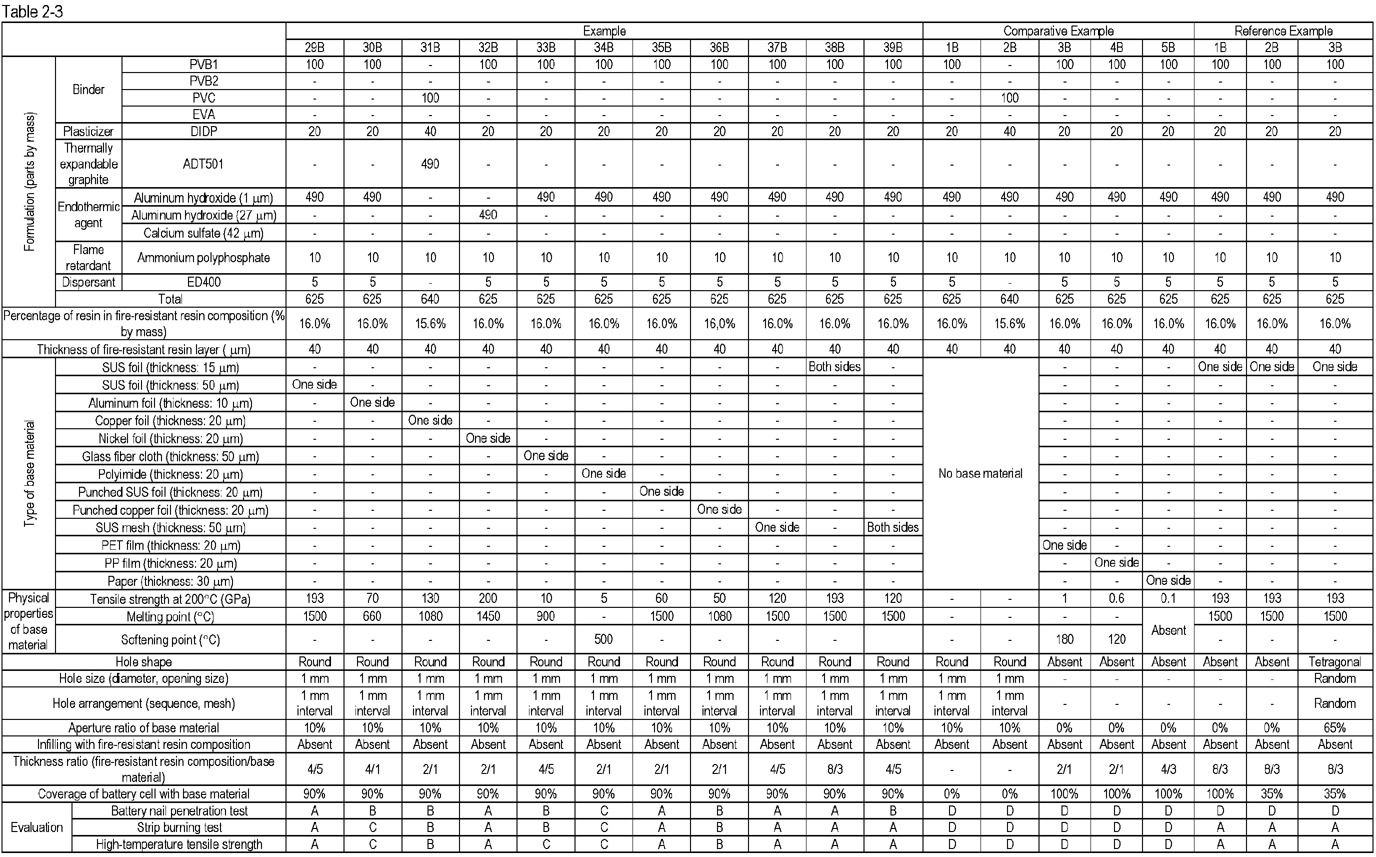

As shown in each Example described above, in the second embodiment of the present invention, features of the battery covered with the fire-resistant laminate with the fire-resistant resin layer disposed on at least one side of the base material are that: the fire-resistant resin layer contains the predetermined fire-resistant additive; and the aperture ratio of the base material is 5 to 60%. As a result, the force of fire was reduced by efficiently dispersing fire spouting out of a thermally runaway battery, and the fire-resistant laminate having high fire-extinguishing performance and fire resistance efficiently extinguished the fire of the battery. Also, in the second embodiment of the present invention, features of the battery covered with the fire-resistant laminate with the fire-resistant resin layer disposed on at least one side of the base material are that: the fire-resistant resin layer contains the predetermined fire-resistant additive; and the coverage of the battery cell is 40 to 90%. As a result, similar effects were exerted. By contrast, in Comparative Examples 1B and 2B, no base material was established. In Comparative Example 3B and Reference Examples 1B to 3B, although the base material was established, its aperture ratio and the coverage of the battery cell with the base material fell outside the ranges of the predetermined values. Therefore, the fire resistance and fire extinguishing characteristics of the fire-resistant laminate were not exploited for fire spouting out of a thermally runaway battery.

### (Third embodiment)

Hereinafter, the fire-resistant resin composition used in the third embodiment of the present invention will be described more specifically with reference to Examples. However, the present invention is not limited by these examples.

The method for measuring each physical property is the same as that of the first embodiment. The battery ignition test and the residual rate of the cross-cut test were conducted by the same methods as in the first embodiment. The tensile strength of the fire-resistant sheet was tested as follows.

### <Tensile strength of fire-resistant sheet>

The tensile strength at ordinary temperature (23°C) of the fire-resistant sheet obtained in each of Examples and Comparative Examples was measured using AUTOGRAPH (manufactured by Shimadzu Corp., AGS-J) in conformity to JIS 7113, and assessed as described below. Although the fire-resistant laminates of Examples 1C to 5C had a base material, their tensile strength was measured in the form of a single fire-resistant sheet unlaminated with the base material.
A: An elastic modulus of 1500 MPa or more
B: An elastic modulus of 1200 MPa or more and less than 1500 MPa
C: An elastic modulus of 900 MPa or more and less than 1200 MPa
D: An elastic modulus of less than 900 MPa

Each component used in Examples and Comparative Examples in the third embodiment is as follows.

### <Resin>

PVB1: Polyvinyl butyral resin, degree of polymerization: 800, degree of acetalization: 69 mol%, acetyl group content: 1 mol%, hydroxy group content: 30 mol%, viscosity at 10% by mass in ethanol/toluene: 142 mPa·s, SP value: 10.6

### <Plasticizer>

DIDP: Diisodecyl phthalate

### <Endothermic agent>

Aluminum hydroxide 1: C301-N, manufactured by Sumitomo Chemical Co., Ltd., average particle size: 1 µm, thermal decomposition onset temperature: 201°C, amount of heat absorbed: 1000 J/g

### <Flame retardant>

Ammonium polyphosphate: AP422, Clariant AG, average particle size: 15 µm

### <Example 1C>

A fire-resistant resin composition having the formulation shown in Table 3 was diluted with a mixed solvent of ethanol and toluene blended at a weight ratio of 50:50 to prepare a slurry liquid having a solid content concentration of 50% by mass. A stainless foil having a thickness of 20 µm was coated on one side with the slurry liquid and dried at 80°C for 30 minutes so that a fire-resistant sheet (fire-resistant resin layer) having a thickness of 40 µm was formed to obtain a fire-resistant laminate with the fire-resistant sheet disposed on one side of the base material.

### <Examples 2C to 4C>

Each fire-resistant laminate with the fire-resistant sheet disposed on one side of the base material was obtained in the same way as in Example 1C except that the type of the base material was changed as shown in Table 3.

### <Example 5C>

A fire-resistant resin composition having the formulation shown in Table 3 was diluted with a mixed solvent of ethanol and toluene blended at a weight ratio of 50:50 to prepare a slurry liquid having a solid content concentration of 50% by mass. A stainless foil having a thickness of 20 µm was coated on both sides with the slurry liquid and dried at 80°C for 30 minutes so that a fire-resistant sheet having a thickness of 40 µm was formed on each side to obtain a fire-resistant laminate with the fire-resistant sheets disposed on both sides of the base material.

**Table 3**

| | | | Example | | | | |
|---|---|---|---|---|---|---|---|
| | | | 1C | 2C | 3C | 4C | 5C |
| Fire-resistant resin composition (parts by mass) | Resin | PVB1 | 10 | 10 | 10 | 10 | 10 |
| | Plasticizer | DIDP | 2 | 2 | 2 | 2 | 2 |
| | Endothermic agent | Aluminum hydroxide 1 (1 µm) | 100 | 100 | 100 | 100 | 100 |
| | Flame retardant | Ammonium polyphosphate | 1 | 1 | 1 | 1 | 1 |
| Resin characteristics | | SP value | 10.6 | 10.6 | 10.6 | 10.6 | 10.6 |
| Endothermic agent characteristics | | Amount of heat absorbed (J/g | 1000 | 1000 | 1000 | 1000 | 1000 |
| | | Decomposition onset temperature (°C) | 200 | 200 | 200 | 200 | 200 |
| Thickness of fire-resistant sheet (µm) | | | 40 | 40 | 40 | 40 | 40 |
| Base material | Type | Stainless foil (20 µm) | One side | | | | Both sides |
| | | Copper foil (10 µm) | | One side | | | |
| | | Polyimide film (15 µm) | | | One side | | |
| | | Aluminum foil (20 µm) | | | | One side | |
| | Physical properties | Tensile strength (Gpa) | 193 | 130 | 5 | 70 | 193 |
| | | Melting point (°C) | 1500 | 1080 | - | 660 | 1500 |
| | | Softening point | - | - | 500 | - | - |
| Evaluation | | Battery ignition test | A | A | A | A | A |
| | | Tensile strength | A | A | A | A | A |
| | | Residual rate of cross-cut test | A | A | B | A | A |

As shown in these Examples, the fire-resistant sheet (fire-resistant resin layer) containing the fire-resistant resin composition of the third embodiment of the present invention using the specific endothermic agent and the content of the resin within the specific range with respect to the endothermic agent had favorable fire-extinguishing performance and high tensile strength, demonstrating that the fire-resistant sheet (fire-resistant resin layer) had excellent mechanical strength.

### Reference Signs List

10: Battery
11: Battery cell
20 and 25: Fire-resistant laminate
21: Base material
22: Fire-resistant resin layer
3 and 3': Hole

## Claims

1. A fire-resistant laminate comprising a base material and a fire-resistant resin layer disposed on at least one side of the base material,
the fire-resistant resin layer formed of a fire-resistant resin composition, the composition comprising a resin and at least one fire-resistant additive selected from the group consisting of an endothermic agent, a flame retardant, and a thermally expandable layered inorganic matter, and
a softening point or a melting point of the base material being 300°C or higher.

2. The fire-resistant laminate according to claim 1, wherein the base material has one or two or more holes, and an aperture ratio of the base material is 5 to 60%.

3. The fire-resistant laminate according to claim 1 or 2, wherein a tensile strength at 200°C of the base material is 3 GPa or more.

4. The fire-resistant laminate according to any one of claims 1 to 3, wherein the base material is a metal base material.

5. The fire-resistant laminate according to any one of claims 1 to 4, wherein the endothermic agent has a thermal decomposition onset temperature of 800°C or lower and an amount of heat absorbed of 300 J/g or larger.

6. The fire-resistant laminate according to any one of claims 1 to 5, wherein the endothermic agent has a thermal decomposition onset temperature of 500°C or lower and an amount of heat absorbed of 500 J/g or larger.

7. The fire-resistant laminate according to any one of claims 1 to 6, wherein the endothermic agent is a hydrated metal compound.

8. The fire-resistant laminate according to any one of claims 1 to 7, wherein the endothermic agent is at least one selected from the group consisting of aluminum hydroxide, magnesium hydroxide, calcium sulfate dihydrate, and magnesium sulfate heptahydrate.

9. The fire-resistant laminate according to any one of claims 1 to 8, wherein the thermally expandable layered inorganic matter is thermally expandable graphite.

10. The fire-resistant laminate according to any one of claims 1 to 9, wherein the flame retardant is a phosphorus atom-containing compound.

11. The fire-resistant laminate according to any one of claims 1 to 10, wherein a content of the fire-resistant additive is 50 to 2500 parts by mass per 100 parts by mass of the resin.

12. The fire-resistant laminate according to any one of claims 1 to 11, wherein the resin is a thermoplastic resin.

13. The fire-resistant laminate according to any one of claims 1 to 12, wherein a thickness of the fire-resistant resin layer is 2 to 5000 µm.

14. The fire-resistant laminate according to any one of claims 1 to 13, wherein a thickness ratio of the fire-resistant resin layer to the base material is 2/8 to 9/1.

15. The fire-resistant laminate according to any one of claims 1 to 14 for use in a battery.

16. A battery comprising a fire-resistant laminate according to any one of claims 1 to 15 and a battery cell, wherein the fire-resistant laminate is disposed on the surface of the battery cell.

17. The battery according to claim 16, wherein the fire-resistant laminate is disposed on the surface of the battery cell such that the fire-resistant resin layer and the base material are arranged in the presented order from the battery cell side.

18. The battery according to claim 16 or 17, wherein the battery cell is covered with the fire-resistant laminate, and a coverage of the battery cell with the base material is 40 to 95%.

19. A fire-resistant laminate comprising a base material and a fire-resistant resin layer disposed on at least one side of the base material,
the fire-resistant resin layer formed of a fire-resistant resin composition, the composition comprising a resin and at least one fire-resistant additive selected from the group consisting of an endothermic agent, a flame retardant, and a thermally expandable layered inorganic matter,
the base material having one or two or more holes, and an aperture ratio of the base material being 5 to 60%.

20. A battery comprising a fire-resistant laminate and a battery cell, the battery cell being covered with the fire-resistant laminate,
the fire-resistant laminate comprising a base material and a fire-resistant resin layer disposed on at least one side of the base material,
the fire-resistant resin layer formed of a fire-resistant resin composition, the composition comprising a resin and at least one fire-resistant additive selected from the group consisting of an endothermic agent, a flame retardant, and a thermally expandable layered inorganic matter, and
a coverage of the battery cell with the base material being 40 to 95%.
